# EUROPEAN PATENT APPLICATION

(11) **EP 4 804 271 A1**
(43) Date of publication of application: **09.09.2026**
(21) Application number: 24887237.6
(22) Date of filing: 27.02.2024
(51) Int. Cl.: H01M 10/054, H01M 10/0566, H01M 4/36

(54) **SODIUM SECONDARY BATTERY AND ELECTRICAL APPARATUS**

(30) Priority: 09.11.2023 CN 202311486490
(71) Applicant: Contemporary Amperex Technology Co., Limited, Ningde, Fujian 352100 (CN)
(72) Inventor: WU, Kai, Ningde, Fujian 352100 (CN); ZOU, Hailin, Ningde, Fujian 352100 (CN); TIE, Zhiwei, Ningde, Fujian 352100 (CN); CHEN, Peipei, Ningde, Fujian 352100 (CN)
(74) Representative: Gong, Jinping
(86) International application number: PCT/CN2024/078793
(87) International publication number: WO 2025/097610

(57) **Abstract**

A sodium secondary battery and an electrical apparatus. The sodium secondary battery comprises a negative electrode sheet and an electrolyte. The negative electrode sheet comprises a negative electrode active material, the negative electrode active material, in a voltage range of 0.5 V-0.05 V, first discharges at a rate of 0.05 C, and then the ratio of actual specific discharge capacity measured using a three-stage stepwise discharge method to discharge at currents of 40 µA and 10 µA, to the total specific discharge capacity of the negative electrode active material, is a. The electrolyte comprises a first component, which comprises a compound represented by formula I. On the basis of the total mass of the electrolyte, the mass content of the first component is b, and a and b satisfy: 0.45≤a+b≤1.5. The sodium secondary battery has a decreased volume expansion rate after being stored at a high temperature, and exhibits improved charging performance at low temperatures and cycle stability.

## Description

### CROSS-REFERENCE

The present application claims priority to Chinese Patent Application No. 202311486490.6 filed on November 09, 2023 and entitled "SODIUM SECONDARY BATTERY AND ELECTRIC DEVICE", which is incorporated herein by reference in its entirety.

### TECHNICAL FIELD

The present application relates to the technical field of secondary batteries, and in particular, to a sodium secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. With the widespread application of secondary batteries, higher demands are being placed on their cycle performance and service life.

In terms of resources and cost, sodium secondary batteries hold greater advantages over lithium secondary batteries. However, sodium secondary batteries suffer from significant gas production, which limits their further application.

### SUMMARY

The present application is made in view of the above problems, and an objective thereof is to provide a sodium secondary battery for reducing the gas production of the sodium secondary battery and improving the cycling stability of the battery.

A first aspect of the present application provides a sodium secondary battery. The sodium secondary battery includes a negative electrode plate and an electrolytic solution. The negative electrode plate includes a negative electrode active material, and a ratio of an actual discharge-specific capacity of the negative electrode active material measured by using a three-stage stepwise discharge method in which the material is first discharged at a rate of 0.05C and then discharged at currents of 40 µA and 10 µA in a voltage range of 0.5 V to 0.05 V to a total discharge-specific capacity of the negative electrode active material is denoted as a.

The electrolytic solution includes a first component, where the first component includes a compound represented by formula I; based on a total mass of the electrolytic solution, a mass content of the first component is b, 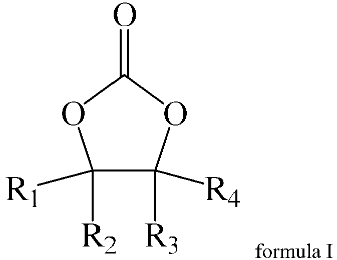
where R₁, R₂, R₃, and R₄ each independently include a hydrogen atom, a halogen atom, C₁₋₆ alkyl, C₁₋₆ haloalkyl, C₁₋₆ alkoxy, C₂₋₆ alkenyl, or C₂₋₆ alkynyl, and R₁, R₂, R₃, and R₄ do not represent hydrogen atoms simultaneously;
a and b satisfy: 0.45 ≤ a + b ≤ 1.5.

The negative electrode plate is relatively stable in the voltage range of 0.5 V to 0.05 V, so that the sodium precipitation process is not easy to occur in the charging and discharging processes, and the possibility of gas production is relatively low. In addition, the compound represented by formula I with excellent oxidation resistance is introduced into the electrolytic solution, so that the oxidation reaction rate of the electrolytic solution on the surface of the positive electrode can be reduced, and the production of proton hydrogen can be reduced. Further, the possibility of generating unstable components by the reduction reaction of proton hydrogen migrating to the surface of the negative electrode can be reduced, and the gas production caused by the side reaction of the unstable components on the surface of the negative electrode can be reduced. However, the compound represented by formula I also negatively affects the viscosity of the electrolytic solution, affects the kinetic performance of the system, affects the stability of the negative electrode plate in the voltage range of 0.5 V to 0.05 V, and may cause gas production.

The negative electrode plate and the electrolytic solution with the value of a + b within an appropriate range can cooperate with each other to reduce the gas production of the secondary battery and improve the kinetic performance and cycling stability of the battery.

In any embodiment, the sodium secondary battery satisfies: 0.6 ≤ a + b ≤ 1.2.

The negative electrode plate and the electrolytic solution with the value of a + b within an appropriate range can cooperate with each other, so that the battery exhibits a low gas production rate, excellent kinetic performance, and cycling stability.

In any embodiment, the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is 0.35 to 0.85.

When the ratio of the actual discharge-specific capacity of the negative electrode active material in the voltage range of 0.5 V to 0.05 V to the total discharge-specific capacity is within an appropriate range, the battery exhibits a low battery volume expansion rate after high-temperature storage, excellent low-temperature charging performance, high energy density, and excellent room-temperature cycle capacity retention rate.

In any embodiment, the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is 0.4 to 0.7.

When the ratio of the actual discharge-specific capacity of the negative electrode active material in the voltage range of 0.5 V to 0.05 V to the total discharge-specific capacity is within an appropriate range, the low-temperature charging performance and the room-temperature cycle performance of the battery can be further improved.

In any embodiment, a ratio c of the actual discharge-specific capacity of the negative electrode active material measured by using the three-stage stepwise discharge method in which the material is first discharged at the rate of 0.05C and then discharged at the currents of 40 µA and 10 µA in a voltage range of 1.5 V to 0.5 V to the total discharge-specific capacity of the negative electrode active material is 0.05 to 0.35.

When the ratio of the actual discharge-specific capacity of the negative electrode active material in the voltage range of 1.5 V to 0.5 V to the total discharge-specific capacity is within an appropriate range, the battery exhibits a low battery volume expansion rate after high-temperature storage, excellent low-temperature charging performance, high energy density, and excellent room-temperature cycle capacity retention rate.

In any embodiment, the ratio c of the actual discharge-specific capacity of the negative electrode active material measured by using the three-stage stepwise discharge method in which the material is first discharged at the rate of 0.05C and then discharged at the currents of 40 µA and 10 µA in the voltage range of 1.5 V to 0.5 V to the total discharge-specific capacity of the negative electrode active material is 0.1 to 0.3.

When the ratio of the actual discharge-specific capacity of the negative electrode active material in the voltage range of 1.5 V to 0.5 V to the total discharge-specific capacity is within an appropriate range, the volume expansion rate of the battery after high-temperature storage can be reduced, and the energy density of the battery can be increased.

In any embodiment, a ratio d of the actual discharge-specific capacity of the negative electrode active material measured by using the three-stage stepwise discharge method in which the material is first discharged at the rate of 0.05C and then discharged at the currents of 40 µA and 10 µA in a voltage range of 0.05 V to 0.005 V to the total discharge-specific capacity of the negative electrode active material is 0.1 to 0.45.

When the ratio of the actual discharge-specific capacity of the negative electrode active material in the voltage range of 0.05 V to 0.005 V to the total discharge-specific capacity is within an appropriate range, the battery exhibits a low battery volume expansion rate after high-temperature storage, excellent low-temperature charging performance, high energy density, and excellent room-temperature cycle capacity retention rate.

In any embodiment, a ratio d of the actual discharge-specific capacity of the negative electrode active material measured by using the three-stage stepwise discharge method in which the material is first discharged at the rate of 0.05C and then discharged at the currents of 40 µA and 10 µA in the voltage range of 0.05 V to 0.005 V to the total discharge-specific capacity of the negative electrode active material is 0.2 to 0.4.

When the ratio of the actual discharge-specific capacity of the negative electrode active material in the voltage range of 0.05 V to 0.005 V to the total discharge-specific capacity is within an appropriate range, both a low volume expansion rate after high-temperature storage and a high battery energy density can be balanced.

In any embodiment, based on a mass of the electrolytic solution, the mass content b of the first component is 5% to 80%.

When the mass content of the first component is within an appropriate range, the battery exhibits a low battery volume expansion rate after high-temperature storage, and excellent low-temperature charging performance and room-temperature cycle capacity retention rate.

In any embodiment, based on a mass of the electrolytic solution, the mass content b of the first component is 10% to 50%.

When the mass content of the first component is within an appropriate range, the battery can balance a low volume expansion rate after high-temperature storage, and the excellent low-temperature charging performance and room-temperature cycle capacity retention rate.

In any embodiment, the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V is 120 mAh/g to 270 mAh/g.

When the actual discharge-specific capacity of the negative electrode active material in the voltage range of 0.5 V to 0.05 V is within an appropriate range, the battery exhibits a low gas production rate, and excellent kinetic performance and cycling stability.

In any embodiment, the first component includes one or more of the following compounds:

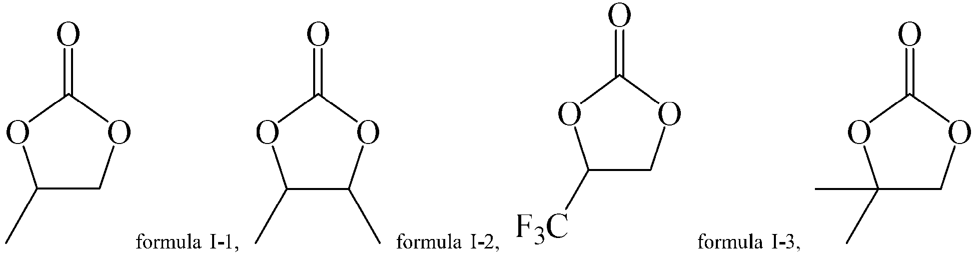

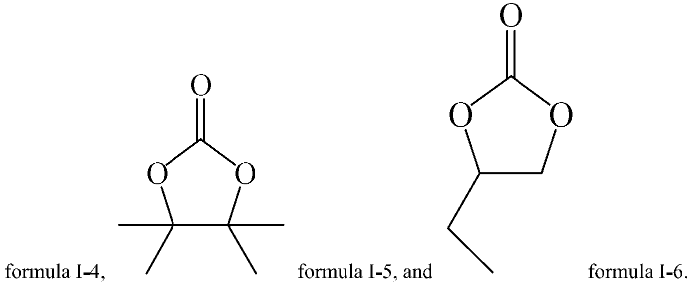

In any embodiment, the negative electrode plate includes a negative electrode current collector and a negative electrode film layer disposed on at least one surface of the negative electrode current collector, and the negative electrode film layer includes a Ca element.

The introduction of the calcium element into the negative electrode film layer can induce the deposition of sodium ions, help inhibit the formation of sodium dendrites, and reduce the oxidation and gas production of unstable components generated by the sodium dendrites in the negative electrode, thereby reducing the gas production of the negative electrode in the discharging process, reducing the volume expansion rate of the battery after high-temperature storage, and improving the room-temperature cycle capacity retention rate of the battery.

In any embodiment, the sodium secondary battery satisfies the following relationship:$3 \times {10}^{- 6} \leq e / d \leq 6 \times {10}^{- 3} ,$ where e represents a mass content of the Ca element based on a mass of the negative electrode film layer; d represents a ratio of the actual discharge-specific capacity of the negative electrode active material measured by using the three-stage stepwise discharge method in which the material is first discharged at the rate of 0.05C and then discharged at the currents of 40 µA and 10 µA in a voltage range of 0.05 V to 0.005 V to the total discharge-specific capacity of the negative electrode active material.

The calcium element in the negative electrode film layer can induce the deposition of sodium ions in the negative electrode, which helps inhibit the formation of sodium dendrites, thereby reducing unstable components generated by the sodium dendrites. When the value of e/d is within an appropriate range, the calcium element in the negative electrode film layer cooperates with the active material in the negative electrode plate, so that the secondary battery exhibits a low gas production rate, high kinetic performance, and cycling stability while maintaining high capacity and high energy density.

In any embodiment, based on a mass of the negative electrode film layer, a mass content e of the Ca element is 1 ppm to 2000 ppm.

When the mass content e of the calcium element in the negative electrode film layer is within an appropriate range, not only can the negative effect of an excessively high content of the calcium element on the capacity and impedance of the secondary battery be reduced, but also the effect of the calcium element for inhibiting dendrites and reducing gas production can be fully exerted, so that the low-temperature charging performance and the room-temperature cycle capacity retention rate of the battery can be improved while the gas production of the battery is reduced.

In any embodiment, based on a mass of the negative electrode film layer, a mass content e of the Ca element is 2 ppm to 1000 ppm.

When the mass content of the calcium element is within an appropriate range, the low-temperature charging performance and the room-temperature cycle capacity retention rate of the battery can be further improved.

In any embodiment, the negative electrode active material includes hard carbon.

In any embodiment, the sodium secondary battery further includes a positive electrode plate, the positive electrode plate includes a positive electrode current collector and a positive electrode film layer disposed on at least one surface of the positive electrode current collector, and the positive electrode film layer includes a positive electrode active material.

In any embodiment, the positive electrode active material includes a Cu element.

The positive electrode active material containing the copper element possesses a more stable structure, and thus can further improve the cycling stability of the battery.

In any embodiment, the sodium secondary battery satisfies the following relationship: b/f ≥ 0.5,
where f represents a mass content of the Cu element based on a mass of the positive electrode active material; b represents the mass content of the first component based on a mass of the electrolytic solution.

When the sodium secondary battery satisfies b/f ≥ 0.5, the compound represented by formula I in the first component enhances the oxidation resistance of the electrolytic solution, which can effectively reduce the possibility of the accelerated electrolytic solution decomposition reaction caused by the conversion of the copper element into Cu³⁺ at a high voltage, and reduce the gas production of the battery. Therefore, the battery exhibits a low volume expansion rate after high-temperature storage, and the energy density of the battery is improved.

In any embodiment, based on the mass of the positive electrode active material, the mass content of the Cu element is less than or equal to 23%, optionally 6.5% to 18%.

When the mass content of the copper element is within an appropriate range, the kinetic performance and the cycling stability of the battery are improved without accelerating the decomposition of the electrolytic solution under the high oxidability and thus deteriorating the gas production of the battery due to the conversion of the copper element into Cu³⁺ at a high voltage.

In any embodiment, the positive electrode active material includes a sodium transition metal oxide, and the sodium transition metal oxide includes NaₘCuₙXₒFeₚMn_{q}O₂₋ₛ, where X includes one or more of Li, Be, B, Mg, Al, K, Ca, Ti, Co, Ni, Zn, Ga, Sr, Y, Nb, Mo, In, Sn, Fe, and Ba, 0.2 ≤ m ≤ 1, 0 ≤ n ≤ 0.5, 0 ≤ o < 0.5, 0 ≤ p ≤ 0.5, 0 < q ≤ 0.68, n + o + p + q = 1, and 0 ≤ s < 0.2.

In any embodiment, the sodium transition metal oxide includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

When the sodium transition metal oxide is used at a high voltage, the anionic oxygen in the sodium transition metal oxide oxidizes the electrolytic solution to produce a large amount of proton hydrogen while contributing to the capacity. The large amount of proton hydrogen is deposited on the negative electrode to form a large amount of unstable components, which in turn accelerates the oxidation and gas production of the unstable components of the negative electrode, leading to severe gas production on the negative electrode side. In the present application, through the cooperation between the negative electrode active material and the first component in the electrolytic solution, the gas production of the battery can be effectively reduced and the cycling stability of the battery can be improved while the battery capacity and energy density are improved.

In any embodiment, the electrolytic solution further includes a second component, and the second component includes at least one of vinylene carbonate, vinyl ethylene carbonate, 1,3-propanesultone, 1,3-propenesultone, ethylene sulfate, maleic anhydride, succinic anhydride, triallyl phosphate, sodium bis(oxalato)borate, sodium tetrafluoro(oxalato)phosphate, sodium difluorobis(oxalato)phosphate, sodium difluorophosphate, and sodium fluorosulfonate.

The component of the SEI film formed at the interface of the negative electrode in the sodium secondary battery mainly includes sodium alkyl carbonate. However, compared with lithium alkyl carbonate, sodium alkyl carbonate has greater solubility in the solvent for the electrolytic solution, which makes the SEI film of the sodium secondary battery poor in stability. The electrolytic solution is prone to continuous side reactions with the negative electrode, resulting in poor cycle performance of the secondary battery. The second component containing an unsaturated functional group can be reduced to a film prior to the solvent at the negative electrode, so that the formation of easily soluble substances such as sodium alkyl carbonate can be effectively inhibited, the cycling stability of the battery can be improved, and the cycle life of the battery can be improved.

In any embodiment, based on a mass of the electrolytic solution, a mass content of the second component is 0.01% to 10%.

When the second component is within an appropriate range, the battery exhibits a low battery volume expansion rate after high-temperature storage, and excellent low-temperature charging performance, room-temperature cycle capacity retention rate, and energy density.

In any embodiment, based on a mass of the electrolytic solution, a mass content of the second component is 0.1% to 5%.

When the mass content of the second component is within an appropriate range, the room-temperature cycle capacity retention rate and the low-temperature charging performance of the battery can be further improved, and at the same time, the low battery volume expansion rate after high-temperature storage is balanced.

A second aspect of the present application provides an electric device, including the sodium secondary battery according to the first aspect.

### BRIEF DESCRIPTION OF THE DRAWINGS

FIG. 1 is a schematic view of a sodium secondary battery according to one embodiment of the present application;
FIG. 2 is an exploded view of the sodium secondary battery according to one embodiment of the present application shown in FIG. 1;
FIG. 3 is a schematic view of a battery module according to one embodiment of the present application;
FIG. 4 is a schematic view of a battery pack according to one embodiment of the present application;
FIG. 5 is an exploded view of the battery pack according to one embodiment of the present application shown in FIG. 4; and
FIG. 6 is a schematic view of an electric device using a sodium secondary battery as a power source according to one embodiment of the present application.

### Description of the reference numerals:

1: battery pack; 2: upper case body; 3: lower case body; 4: battery module; 5: sodium secondary battery; 51: housing; 52: electrode assembly; 53: cover plate.

### DETAILED DESCRIPTION

Hereinafter, embodiments of the sodium secondary battery and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are openended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

It is widely recognized in the prior art that the gas production of sodium secondary batteries primarily stems from the oxidation of the electrolytic solution by the positive electrode active material at high voltages. Therefore, in the prior art, a solution of coating the positive electrode active material and forming a film on the surface of the positive electrode is often used to reduce the gas production of secondary batteries. During research, the applicant found that another important factor for gas production of the sodium secondary batteries lies in the negative electrode. The stability of the negative electrode interface is critical to reducing the gas production of the negative electrode.

### [Sodium Secondary Battery]

Based on this, the present application provides a sodium secondary battery. The sodium secondary battery includes a negative electrode plate and an electrolytic solution. The negative electrode plate includes a negative electrode active material. The ratio of the actual discharge-specific capacity of the negative electrode active material measured by using a three-stage stepwise discharge method in which the material is first discharged at the rate of 0.05C and then discharged at currents of 40 µA and 10 µA in the voltage range of 0.5 V to 0.05 V to the total discharge-specific capacity of the negative electrode active material is denoted as a.

The electrolytic solution includes a first component, where the first component includes a compound represented by formula I; based on the total mass of the electrolytic solution, the mass content of the first component is b, 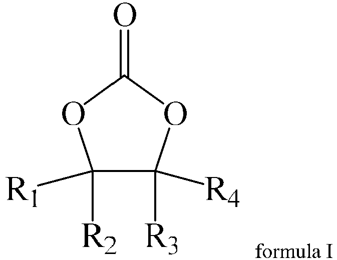
where R₁, R₂, R₃, and R₄ each independently include a hydrogen atom, a halogen atom, C₁₋₆ alkyl, C₁₋₆ haloalkyl, C₁₋₆ alkoxy, C₂₋₆ alkenyl, or C₂₋₆ alkynyl, and R₁, R₂, R₃, and R₄ do not represent hydrogen atoms simultaneously;
a and b satisfy: 0.45 ≤ a + b ≤ 1.5.

The sodium secondary battery is a secondary battery that primarily works by the movement of sodium ions between the positive electrode and the negative electrode.

The ratio of the actual discharge-specific capacity of the negative electrode active material in the voltage range of 0.5 V to 0.05 V to the total discharge-specific capacity of the negative electrode active material may be measured by using charge and discharge curves of the button battery. The test method adopts a three-stage stepwise discharge method: discharging at the rate of 0.05C first, and then discharging at currents of 40 µA and 10 µA to reduce the phenomenon of incomplete capacity performance caused by polarization under a large-rate discharge. As an example of the three-stage stepwise discharge method, a negative electrode plate in a sodium secondary battery was punched into small discs with a diameter of 14 mm to be used as a positive electrode in a button battery, and a sodium metal sheet was used as a negative electrode. A 1.3 mol/L sodium hexafluorophosphate solution was used as an electrolytic solution, and solvents in the electrolytic solution included ethylene carbonate, dimethyl carbonate, and ethyl methyl carbonate in a mass ratio of 1:2:2. The button battery was assembled and subjected to a constant current charging and discharging test in the voltage range of 0.005 V to 1.5 V. In the first discharging process, the battery was discharged to 0.005 V at a constant current rate of 0.05C, discharged to 0.005 V at a constant current rate of 40 µA after standing until the voltage returned to a stable value, and discharged to 0.005 V at a constant current rate of 10 µA after standing until the voltage returned to a stable value; the battery was charged to 1.5 V at a constant current rate of 0.05C in the charging process, thereby completing the first charging and discharging cycle. Then, the battery was discharged to 0.005 V at a constant current rate of 0.05C, discharged to 0.005 V at a constant current rate of 40 µA after standing until the voltage returned to a stable value, and discharged to 0.005 V at a constant current rate of 10 µA after standing until the voltage returned to a stable value; the battery was charged to 1.5 V at a constant current rate of 0.05C in the charging process, thereby completing the second cycle, and obtaining charge and discharge curves of the second charging and discharging cycle. In the discharge curve of the second charging and discharging cycle, the discharge capacity (mAh) selected from the voltage range of 0.5 V to 0.05 V was divided by the mass (g) of the negative electrode active material in the negative electrode plate, and this was denoted as the actual discharge-specific capacity of the negative electrode active material at 0.5 V to 0.05 V (in mAh/g). Similarly, in the discharge curve of the second charging and discharging cycle, the discharge capacity (mAh) selected from the voltage range of 1.5 V to 0.005 V was divided by the mass (g) of the negative electrode active material in the negative electrode plate, and this was denoted as the total discharge-specific capacity of the negative electrode active material (in mAh/g). The value a can be obtained by dividing the obtained actual discharge-specific capacity of the negative electrode active material at 0.5 V to 0.05 V by the total discharge-specific capacity of the negative electrode active material. The charge and discharge curves can be measured by any electrochemical testing system in the art. As an example, the charge and discharge curves are obtained by testing using a CT3002A 1U model testing system from Land Electronics.

As used herein, the term "halogen atom" refers to elements in Group VIIA of the periodic table, including but not limited to: F, Cl, Br, and I.

As used herein, the term "C₁₋₆ alkyl" refers to a linear or branched hydrocarbon chain group composed only of carbon and hydrogen atoms, containing no unsaturation, having one to six carbon atoms, and attached to the rest of the molecule via a single bond. As an example, it includes, but is not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, tert-butyl, pentyl, isopentyl, neopentyl, and hexyl.

As used herein, the term "C₁₋₆ haloalkyl" refers to a C₁₋₆ alkyl group where at least one hydrogen atom is substituted with a halogen atom. As an example, it includes, but is not limited to: -CF₃, -CF₂CH₂, -CF₂CH₂CH₃, - CF₂CF₂CH₂CH₃, -CF₂CH₂CH₂CH₂CH₃, and -CH₂CH(CF₃)CH(CF₃)CH₃.

As used herein, the term "C₁₋₆ alkoxy" refers to C₁₋₆ alkyl linked to a main carbon chain via an oxygen atom. As an example, it includes, but is not limited to: methoxy, ethoxy, n-propoxy, isopropoxy, n-butoxy, tert-butoxy, sec-butoxy, n-pentyloxy, n-hexyloxy, and 1,2-dimethylbutoxy.

As used herein, the term "C₂₋₆ alkenyl " refers to a linear or branched hydrocarbon group having 2 to 6 carbon atoms and at least one carbon-carbon double bond. As an example, it includes, but is not limited to: vinyl, 1-propenyl, 2-propenyl, 1-butenyl, 2-butenyl, butadienyl, pentenyl, pentadienyl, and hexenyl.

As used herein, the term "C₂₋₆ alkynyl " refers to a linear or branched hydrocarbon group having 2 to 6 carbon atoms, at least one carbon-carbon triple bond, and optionally one or more carbon-carbon double bonds. As an example, it includes, but is not limited to: ethynyl, 1-propynyl, 2-propynyl, 1-butynyl, 2-butynyl, pentynyl, and hexynyl.

In some embodiments, the value of a + b is optionally 0.45, 0.55, 0.65, 0.75, 0.85, 0.95, 1.05, 1.15, 1.25, 1.35, 1.4, 1.5, or in a numerical range between any two values.

The applicant found that the gas production of the negative electrode plate in the charging and discharging processes can be divided into three stages. The first stage is in the voltage range of 1.5 V to 0.5 V, and organic components of the solid-state electrolyte interface film (SEI film) on the surface of the negative electrode are prone to dissolution or oxidative decomposition in the voltage range of 1.5 V to 0.5 V, resulting in gas generation and gas production. In addition, after the SEI film is broken, the negative electrode is exposed to the electrolytic solution for a reaction. The solvent molecules continuously decompose on the surface of the electrode plate to produce gas, so that the battery exhibits a high expansion rate, and soluble byproducts are produced. The byproducts cause irreversible side reactions, which reduce the cycling stability and kinetic performance of the whole system. The second stage is in the voltage range of 0.5 V to 0.05 V. The negative electrode plate is relatively stable in the voltage range of 0.5 V to 0.05 V, so that the sodium precipitation process is not easy to occur in the charging and discharging processes, and the possibility of gas production is relatively low. The third phase is in the voltage range of 0.05 V to 0.005 V, and in the charging process, sodium precipitation is easily caused. The precipitated sodium dendrites have extremely high reactivity, and rapidly react with the electrolytic solution to produce a large amount of gas and unstable byproducts. The unstable byproducts react at 1.5 V to 0.5 V to produce a large amount of gas, which exacerbates the gas production and the deterioration of the cycling stability of the battery.

In addition, the compound represented by formula 1 with excellent oxidation resistance is introduced into the electrolytic solution, so that the oxidation reaction rate of the electrolytic solution on the surface of the positive electrode can be reduced, and the production of proton hydrogen can be reduced. Further, the possibility of generating unstable components by the reduction reaction of proton hydrogen migrating to the surface of the negative electrode can be reduced, and the gas production caused by the side reaction of the unstable components on the surface of the negative electrode can be reduced. However, the compound represented by formula I also negatively affects the viscosity of the electrolytic solution, affects the kinetic performance of the system, and causes sodium precipitation in the voltage range of 0.5 V to 0.05 V, thereby affecting the stability of the negative electrode plate in the voltage range of 0.5 V to 0.05 V and possibly causing gas production.

In summary, the negative electrode plate and the electrolytic solution with the value of a + b within an appropriate range can cooperate with each other, so that the gas production of the secondary battery can be reduced and the kinetic performance and cycling stability of the battery can be improved while ensuring the high energy density of the battery.

In some embodiments, the sodium secondary battery satisfies: 0.6 ≤ a + b ≤ 1.2. In some embodiments, the value of a + b is optionally 0.6, 0.65, 0.75, 0.85, 0.95, 1.05, 1.1, 1.2, or in a numerical range between any two values.

The negative electrode plate and the electrolytic solution with the value of a + b within an appropriate range can cooperate with each other, so that the battery balances both the excellent low-temperature charging performance and room-temperature cycle capacity retention rate, and a high energy density.

In some embodiments, the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is 0.35 to 0.85. In some embodiments, the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is optionally 0.35, 0.45, 0.55, 0.65, 0.75, 0.85, or in a numerical range between any two values.

A high discharge-specific capacity proportion of the negative electrode active material in the voltage range of 0.5 V to 0.05 V helps reduce gas production. However, the discharge-specific capacity proportion of the negative electrode active material in the negative electrode plate in the voltage range of 0.5 V to 0.05 V also affects the energy density of the battery. An excessively high discharge-specific capacity proportion of the negative electrode active material in the voltage range of 0.5 V to 0.05 V negatively affects the energy density of the battery.

The actual discharge-specific capacity proportion of the negative electrode active material in the voltage range of 0.5 V to 0.05 V is within an appropriate range, so that the battery exhibits high energy density and low gas production. In addition, this can reduce the negative impact of excessive gas production caused by an excessively high actual discharge-specific capacity proportion of the negative electrode active material in the voltage range of 1.5 V to 0.5 V, and can also reduce the negative impact of excessive sodium precipitation caused by an excessively high actual discharge-specific capacity proportion of the negative electrode active material in the voltage range of 0.05 V to 0.005 V on gas production of the battery.

When the ratio of the actual discharge-specific capacity of the negative electrode active material in the voltage range of 0.5 V to 0.05 V to the total discharge-specific capacity is within an appropriate range, the battery exhibits a low battery volume expansion rate after high-temperature storage, excellent low-temperature charging performance, high energy density, and excellent room-temperature cycle capacity retention rate.

In some embodiments, the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is 0.4 to 0.7. In some embodiments, the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is optionally 0.4, 0.45, 0.55, 0.65, 0.7, or in a numerical range between any two values.

When the ratio of the actual discharge-specific capacity of the negative electrode active material in the voltage range of 0.5 V to 0.05 V to the total discharge-specific capacity is within an appropriate range, the low-temperature charging performance and the room-temperature cycle performance of the battery can be further improved.

In some embodiments, the ratio c of the actual discharge-specific capacity of the negative electrode active material measured by using the three-stage stepwise discharge method in which the material is first discharged at the rate of 0.05C and then discharged at the currents of 40 µA and 10 µA in the voltage range of 1.5 V to 0.5 V to the total discharge-specific capacity of the negative electrode active material is 0.05 to 0.35. In some embodiments, the ratio c of the actual discharge-specific capacity of the negative electrode active material measured by using the three-stage stepwise discharge method in which the material is first discharged at the rate of 0.05C and then discharged at the currents of 40 µA and 10 µA in the voltage range of 1.5 V to 0.5 V to the total discharge-specific capacity of the negative electrode active material is optionally 0.05, 0.1, 0.15, 0.2, 0.25, 0.3, 0.35, or in a numerical range between any two values.

For the ratio of the actual discharge-specific capacity of the negative electrode active material in the voltage range of 1.5 V to 0.5 V to the total discharge-specific capacity of the negative electrode active material, reference is made to the above method for measuring the ratio of the actual discharge-specific capacity of the negative electrode active material in the voltage range of 0.5 V to 0.05 V to the total discharge-specific capacity of the negative electrode active material. In the discharge curve of the second charging and discharging cycle, the discharge capacity (mAh) selected from the voltage range of 1.5 V to 0.5 V is divided by the mass (g) of the negative electrode active material in the negative electrode plate, and this is denoted as the actual discharge-specific capacity of the negative electrode active material at 1.5 V to 0.5 V (in mAh/g). Similarly, in the discharge curve of the second charging and discharging cycle, the discharge capacity (mAh) selected from the voltage range of 1.5 V to 0.005 V is divided by the mass (g) of the negative electrode active material in the negative electrode plate, and this is denoted as the total discharge-specific capacity of the negative electrode active material (in mAh/g).

The actual discharge-specific capacity proportion of the negative electrode active material in the voltage range of 1.5 V to 0.5 V is within an appropriate range, reducing the possibility of dissolution or decomposition of the SEI film when the negative electrode voltage is in the voltage range of 1.0 V to 0.5 V in the discharging process. In addition, this can reduce the negative impact of an excessively high actual discharge-specific capacity proportion of the negative electrode active material in the voltage range of 0.5 V to 0.05 V on the energy density of the battery, and can also reduce the negative impact of excessive sodium precipitation caused by an excessively high actual discharge-specific capacity proportion of the negative electrode active material in the voltage range of 0.05 V to 0.005 V on gas production of the battery.

When the ratio of the actual discharge-specific capacity of the negative electrode active material in the voltage range of 1.5 V to 0.5 V to the total discharge-specific capacity is within an appropriate range, the battery exhibits a low battery volume expansion rate after high-temperature storage, excellent low-temperature charging performance, high energy density, and excellent room-temperature cycle capacity retention rate.

In some embodiments, the ratio c of the actual discharge-specific capacity of the negative electrode active material measured by using the three-stage stepwise discharge method in which the material is first discharged at the rate of 0.05C and then discharged at the currents of 40 µA and 10 µA in the voltage range of 1.5 V to 0.5 V to the total discharge-specific capacity of the negative electrode active material is 0.1 to 0.3. In some embodiments, the ratio c of the actual discharge-specific capacity of the negative electrode active material measured by using the three-stage stepwise discharge method in which the material is first discharged at the rate of 0.05C and then discharged at the currents of 40 µA and 10 µA in the voltage range of 1.5 V to 0.5 V to the total discharge-specific capacity of the negative electrode active material is optionally 0.1, 0.15, 0.2, 0.25, 0.3, or in a numerical range between any two values.

When the ratio of the actual discharge-specific capacity of the negative electrode active material in the voltage range of 1.5 V to 0.5 V to the total discharge-specific capacity is within an appropriate range, the volume expansion rate of the battery after high-temperature storage can be reduced, and the energy density of the battery can be increased.

In some embodiments, the ratio d of the actual discharge-specific capacity of the negative electrode active material measured by using the three-stage stepwise discharge method in which the material is first discharged at the rate of 0.05C and then discharged at the currents of 40 µA and 10 µA in the voltage range of 0.05 V to 0.005 V to the total discharge-specific capacity of the negative electrode active material is 0.1 to 0.45. In some embodiments, the ratio d of the actual discharge-specific capacity of the negative electrode active material measured by using the three-stage stepwise discharge method in which the material is first discharged at the rate of 0.05C and then discharged at the currents of 40 µA and 10 µA in the voltage range of 0.05 V to 0.005 V to the total discharge-specific capacity of the negative electrode active material is optionally 0.1, 0.2, 0.3, 0.4, 0.45, or in a numerical range between any two values.

For the ratio of the actual discharge-specific capacity of the negative electrode active material in the voltage range of 0.05 V to 0.005 V to the total discharge-specific capacity of the negative electrode active material, reference is made to the above method for measuring the ratio of the actual discharge-specific capacity of the negative electrode active material in the voltage range of 0.5 V to 0.05 V to the total discharge-specific capacity of the negative electrode active material. In the discharge curve of the second charging and discharging cycle, the discharge capacity (mAh) selected from the voltage range of 0.05 V to 0.005 V is divided by the mass (g) of the negative electrode active material in the negative electrode plate, and this is denoted as the actual discharge-specific capacity of the negative electrode active material at 0.05 V to 0.005 V (in mAh/g). Similarly, in the discharge curve of the second charging and discharging cycle, the discharge capacity (mAh) selected from the voltage range of 1.5 V to 0.005 V is divided by the mass (g) of the negative electrode active material in the negative electrode plate, and this is denoted as the total discharge-specific capacity of the negative electrode active material (in mAh/g).

As described above, a low discharge-specific capacity proportion of the negative electrode active material in the voltage range of 0.05 V to 0.005 V helps reduce gas production by the negative electrode plate. However, the discharge-specific capacity proportion of the negative electrode active material in the voltage range of 0.05 V to 0.005 V also affects the energy density of the battery. An excessively small discharge-specific capacity proportion of the negative electrode active material in the voltage range of 0.05 V to 0.005 V negatively affects the energy density of the battery.

Therefore, the discharge-specific capacity proportion of the negative electrode active material in the voltage range of 0.05 V to 0.005 V is controlled to be within an appropriate range, to avoid the negative impact of excessive sodium precipitation caused by an excessively high value of d on gas production of the battery, and to reduce the negative impact of an excessively low value of d on energy density of the battery.

When the ratio of the actual discharge-specific capacity of the negative electrode active material in the voltage range of 0.05 V to 0.005 V to the total discharge-specific capacity is within an appropriate range, the battery exhibits a low battery volume expansion rate after high-temperature storage, excellent low-temperature charging performance, high energy density, and excellent room-temperature cycle capacity retention rate.

In some embodiments, the ratio d of the actual discharge-specific capacity of the negative electrode active material measured by using the three-stage stepwise discharge method in which the material is first discharged at the rate of 0.05C and then discharged at the currents of 40 µA and 10 µA in the voltage range of 0.05 V to 0.005 V to the total discharge-specific capacity of the negative electrode active material is 0.2 to 0.4. In some embodiments, the ratio d of the actual discharge-specific capacity of the negative electrode active material measured by using the three-stage stepwise discharge method in which the material is first discharged at the rate of 0.05C and then discharged at the currents of 40 µA and 10 µA in the voltage range of 0.05 V to 0.005 V to the total discharge-specific capacity of the negative electrode active material is optionally 0.2, 0.25, 0.3, 0.35, 0.4, or in a numerical range between any two values.

When the ratio of the actual discharge-specific capacity of the negative electrode active material in the voltage range of 0.05 V to 0.005 V to the total discharge-specific capacity is within an appropriate range, both a low volume expansion rate after high-temperature storage and a high battery energy density can be balanced.

In some embodiments, based on the mass of the electrolytic solution, the mass content b of the first component is 5% to 80%. In some embodiments, based on the mass of the electrolytic solution, the mass content a of the first component is optionally 5%, 10%, 15%, 20%, 25%, 30%, 35%, 40%, 45%, 50%, 55%, 60%, 65%, 70%, 75%, 80%, or any numerical value therebetween.

When the mass content b of the first component is within an appropriate range, the oxidation resistance of the electrolytic solution can be improved, the production of proton hydrogen is reduced, and the gas production caused by side reactions on the surface of the negative electrode is reduced; at the same time, the first component with an appropriate mass content enables the electrolytic solution to have an excellent electrical conductivity, thereby improving the low-temperature charging performance and the room-temperature cycle capacity retention rate.

When the mass content of the first component is within an appropriate range, the battery exhibits a low battery volume expansion rate after high-temperature storage, and excellent low-temperature charging performance and room-temperature cycle capacity retention rate.

In some embodiments, based on the mass of the electrolytic solution, the mass content b of the first component is 10% to 50%. In some embodiments, based on the mass of the electrolytic solution, the mass content a of the first component is optionally 10%, 15%, 20%, 25%, 30%, 35%, 40%, 45%, 50%, or any numerical value therebetween.

When the mass content of the first component is within an appropriate range, the battery can balance a low volume expansion rate after high-temperature storage, and the excellent low-temperature charging performance and room-temperature cycle capacity retention rate.

In some embodiments, the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V is 120 mAh/g to 270 mAh/g.

The actual discharge-specific capacity of the negative electrode active material in the voltage range of 0.5 V to 0.05 V is within an appropriate range, so that the electrode plate exhibits a high capacity and the battery exhibits a high energy density. At the same time, the negative impact of an excessively high actual discharge-specific capacity in the voltage range of 0.5 V to 0.05 V on gas production can be reduced.

When the actual discharge-specific capacity of the negative electrode active material in the voltage range of 0.5 V to 0.05 V is within an appropriate range, the battery exhibits a low gas production rate, and excellent kinetic performance and cycling stability.

In some embodiments, the first component includes one or more of the following compounds:

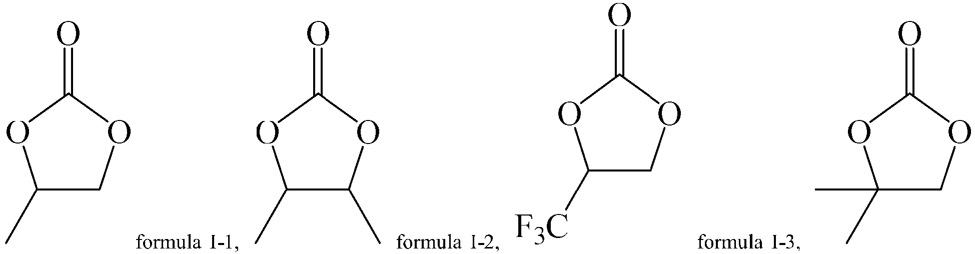

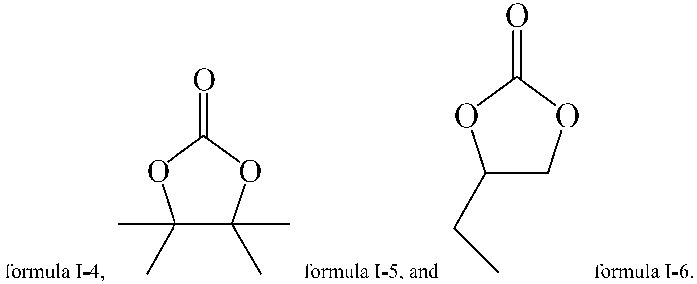

Compared with ethylene carbonate, the compounds described above exhibit superior oxidation resistance, which is conducive to improving the oxidation resistance of the electrolytic solution, further reducing the oxidation reaction rate of the electrolytic solution on the surface of the positive electrode, reducing the production of proton hydrogen, and reducing gas production. Meanwhile, compared with ethylene carbonate, the compounds described above have less content of active hydrogen on the five-membered ring, so that the decomposition reaction does not easily occur to produce proton hydrogen, and the occurrence of gas production is reduced.

In some embodiments, the negative electrode plate includes a negative electrode current collector and a negative electrode film layer disposed on at least one surface of the negative electrode current collector. The negative electrode film layer includes a Ca element.

It can be understood that the calcium element may be introduced into the negative electrode film in any form. In some embodiments, the calcium element is introduced into the negative electrode film in the form of a calcium oxide or a calcium salt. In some embodiments, the calcium element is introduced into the negative electrode film in the form of CaO.

The introduction of the calcium element into the negative electrode film layer can induce the deposition of sodium ions, help inhibit the formation of sodium dendrites, and reduce the oxidation and gas production of unstable components generated by the sodium dendrites in the negative electrode, thereby reducing the gas production of the negative electrode in the discharging process, reducing the volume expansion rate of the battery after high-temperature storage, and improving the room-temperature cycle capacity retention rate of the battery.

In some embodiments, the sodium secondary battery satisfies the following relationship:$3 \times {10}^{- 6} \leq e / d \leq 6 \times {10}^{- 3} ,$ where e represents the mass content of the Ca element based on the mass of the negative electrode film layer; d represents the ratio of the actual discharge-specific capacity of the negative electrode active material measured by using the three-stage stepwise discharge method in which the material is first discharged at the rate of 0.05C and then discharged at the currents of 40 µA and 10 µA in the voltage range of 0.05 V to 0.005 V to the total discharge-specific capacity of the negative electrode active material. In some embodiments, the value of e/d is optionally 3 × 10⁻⁶, 4.5 × 10⁻⁶, 1.0 × 10⁻⁵, 1.1 × 10⁻⁵, 1.3 × 10⁻⁵, 1.4 × 10⁻⁵, 5.5 × 10⁻⁵, 1.0 × 10⁻⁴, 1.2 × 10⁻⁴, 1.4 × 10⁻⁴, 1.5 × 10⁻⁴, 3.0 × 10⁻⁴, 4.0 × 10⁻⁴, 5.0 × 10⁻⁴, 6.0 × 10⁻⁴, 7.0 × 10⁻⁴, 8.0 × 10⁻⁴, 9.0 × 10⁻⁴, 1.0 × 10⁻³,2.0 × 10⁻³, 3.0 × 10⁻³, 4.0 × 10⁻³, 4.5 × 10⁻³, 6 × 10⁻³, or any numerical value therebetween.

As described above, in the voltage range of 0.05 V to 0.005 V, the negative electrode plate is prone to sodium precipitation to form sodium dendrites, leading to gas production. The calcium element in the negative electrode film layer can induce the deposition of sodium ions in the negative electrode, which helps inhibit the formation of sodium dendrites, thereby reducing gas production caused by unstable components generated by the sodium dendrites. When the value of e/d is within an appropriate range, the calcium element in the negative electrode film layer cooperates with the negative electrode plate, so that the secondary battery exhibits a low gas production rate, high kinetic performance, and cycling stability while maintaining high capacity and high energy density.

In some embodiments, based on the mass of the negative electrode film layer, the mass content e of the Ca element is 1 ppm to 2000 ppm. In some embodiments, based on the mass of the negative electrode film layer, the mass content e of the Ca element is optionally 1 ppm, 5 ppm, 10 ppm, 100 ppm, 150 ppm, 200 ppm, 250 ppm, 300 ppm, 350 ppm, 400 ppm, 450 ppm, 500 ppm, 650 ppm, 700 ppm, 750 ppm, 800 ppm, 850 ppm, 900 ppm, 950 ppm, 1000 ppm, 1500 ppm, 2000 ppm, or any numerical value therebetween.

When the mass content e of the calcium element in the negative electrode film layer is within an appropriate range, not only can the negative effect of an excessively high content of the calcium element on the capacity and impedance of the secondary battery be reduced, but also the effect of the calcium element for inhibiting dendrites and reducing gas production can be fully exerted, so that the low-temperature charging performance and the room-temperature cycle capacity retention rate of the battery can be improved while the gas production of the battery is reduced.

In some embodiments, based on the mass of the negative electrode film layer, the mass content e of the Ca element is 2 ppm to 1000 ppm. In some embodiments, based on the mass of the negative electrode film layer, the mass content e of the Ca element is optionally 2 ppm, 10 ppm, 100 ppm, 150 ppm, 200 ppm, 250 ppm, 300 ppm, 350 ppm, 400 ppm, 450 ppm, 500 ppm, 650 ppm, 700 ppm, 750 ppm, 800 ppm, 850 ppm, 900 ppm, 950 ppm, 1000 ppm, or any numerical value therebetween.

When the mass content of the calcium element is within an appropriate range, the low-temperature charging performance and the room-temperature cycle capacity retention rate of the battery can be further improved.

In some embodiments, the negative electrode active material includes hard carbon.

In some embodiments, the hard carbon includes unmodified hard carbon or doped modified hard carbon.

In some embodiments, the negative electrode active material further includes graphite or soft carbon with a high discharge-specific capacity.

In some embodiments, the negative electrode active material is hard carbon.

In some embodiments, the hard carbon is a negative electrode active material with a particle size of 2 µm to 20 µm, prepared by performing primary calcination on a biomass material in an inert environment at 600 °C to 1000 °C for 1 h to 5 h, followed by grinding for 1 h to 4 h, and then performing secondary calcination in an inert environment at 1100 °C to 2000 °C for 2 h to 8 h.

In some embodiments, the biomass material includes one or more of peanut shells, straws, sawdust, walnut shells, sugarcane bagasse, rice husks, wheat husks, coconut shells, apricot shells, wood, lignin, and papermaking residue.

In some embodiments, the temperature for the primary calcination is optionally 600 °C, 700 °C, 800 °C, 900 °C, 1000 °C, or in a numerical range between any two values.

In some embodiments, the time for the primary calcination is optionally 1 h, 2 h, 3 h, 4 h, 5 h, or in a numerical range between any two values.

In some embodiments, the grinding time is optionally 1 h, 2 h, 3 h, 4 h, or in a numerical range between any two values.

In some embodiments, the temperature for the secondary calcination is optionally 1100 °C, 1200 °C, 1300 °C, 1400 °C, 1500 °C, 1600 °C, 1700 °C, 1800 °C, 1900 °C, 2000 °C, or in a numerical range between any two values.

In some embodiments, the time for the secondary calcination is optionally 2 h, 3 h, 4 h, 5 h, 6 h, 7 h, 8 h, or in a numerical range between any two values.

In any embodiment, the sodium secondary battery further includes a positive electrode plate, the positive electrode plate includes a positive electrode current collector and a positive electrode film layer disposed on at least one surface of the positive electrode current collector, and the positive electrode film layer includes a positive electrode active material.

In any embodiment, the positive electrode active material includes a Cu element.

The positive electrode active material containing the copper element possesses a more stable structure, and thus can further improve the cycling stability of the battery.

In some embodiments, the sodium secondary battery satisfies the following relationship: b/f ≥ 0.5,
where f represents the mass content of the Cu element based on the mass of the positive electrode active material; b represents the mass content of the first component based on the mass of the electrolytic solution. In some embodiments, the value of b/f is optionally 0.5, 0.7, 1, 1.5, 2, 2.5, 3, 3.5, 4, 4.5, 5, 5.5, 6, 6.5, or any numerical value therebetween.

When the sodium secondary battery satisfies b/f ≥ 0.5, the compound represented by formula I in the first component enhances the oxidation resistance of the electrolytic solution, which can effectively reduce the possibility of the accelerated electrolytic solution decomposition reaction caused by the conversion of the copper element into Cu³⁺ at a high voltage, and reduce the occurrence of gas production of the battery. Therefore, the battery exhibits a low volume expansion rate after high-temperature storage, and the energy density of the battery is improved.

In some embodiments, based on the mass of the positive electrode active material, the mass content of the Cu element is less than or equal to 23%. In some embodiments, based on the mass of the positive electrode active material, the mass content of the Cu element is optionally 0%, 1%, 5%, 6.5%, 10%, 13%, 15%, 18%, 20%, 23%, or any numerical value therebetween.

When the mass content of the copper element is within an appropriate range, the kinetic performance and the cycling stability of the battery are improved without accelerating the decomposition of the electrolytic solution under the high oxidability and thus deteriorating the gas production of the battery due to the conversion of the copper element into Cu³⁺ at a high voltage.

In some embodiments, based on the mass of the positive electrode active material, the mass content of the Cu element is 6.5% to 18%. In some embodiments, based on the mass of the positive electrode active material, the mass content of the Cu element is optionally 6.5%, 10%, 13%, 15%, 18%, or any numerical value therebetween.

The mass content of the copper element is in the range of 6.5% to 18%, which can further balance both a low battery volume expansion rate after high-temperature storage, and the excellent low-temperature charging performance and room-temperature cycle capacity retention rate for the battery.

In some embodiments, the positive electrode active material includes a sodium transition metal oxide, and the sodium transition metal oxide includes NaₘCuₙXₒFeₚMn_{q}O₂₋ₛ, where X includes one or more of Li, Be, B, Mg, Al, K, Ca, Ti, Co, Ni, Zn, Ga, Sr, Y, Nb, Mo, In, Sn, Fe, and Ba, 0.2 ≤ m ≤ 1,0 ≤ n ≤ 0.5, 0 ≤ o < 0.5, 0 ≤ p ≤ 0.5, 0 < q ≤ 0.68, n + o + p + q = 1, and 0 ≤ s < 0.2.

In some embodiments, the sodium transition metal oxide includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

When the sodium transition metal oxide is used at a high voltage, the anionic oxygen in the sodium transition metal oxide produces a large amount of proton hydrogen while contributing to the capacity, which accelerates the oxidation and gas production of the unstable components of the negative electrode, leading to severe gas production on the negative electrode side. In the present application, through the cooperation between the negative electrode active material and the first component in the electrolytic solution, the gas production of the battery can be effectively reduced and the cycling stability of the battery can be improved while the battery capacity and energy density are improved.

In some embodiments, the electrolytic solution further includes a second component, and the second component includes at least one of vinylene carbonate, vinyl ethylene carbonate, 1,3-propanesultone, 1,3-propenesultone, ethylene sulfate, maleic anhydride, succinic anhydride, triallyl phosphate, sodium bis(oxalato)borate, sodium tetrafluoro(oxalato)phosphate, sodium difluorobis(oxalato)phosphate, sodium difluorophosphate, and sodium fluorosulfonate.

The component of the SEI film formed at the interface of the negative electrode in the sodium secondary battery mainly includes sodium alkyl carbonate. However, compared with lithium alkyl carbonate, sodium alkyl carbonate has greater solubility in the solvent for the electrolytic solution, which makes the SEI film of the sodium secondary battery poor in stability. The electrolytic solution continuously undergoes side reactions with the negative electrode, resulting in poor cycle performance of the secondary battery. The second component containing an unsaturated functional group can be reduced to a film prior to the solvent at the negative electrode, so that the formation of easily soluble substances such as sodium alkyl carbonate can be effectively inhibited, the cycling stability of the battery can be improved, and the cycle life of the battery can be improved.

In some embodiments, based on the mass of the electrolytic solution, the mass content of the second component is 0.01% to 10%. In some embodiments, based on the total mass of the electrolytic solution, the mass content of the second component is optionally 0.01%, 0.1%, 1%, 2%, 3%, 4%, 5%, 6%, 7%, 8%, 9%, 10%, or any numerical value therebetween.

When the second component is within an appropriate range, the battery exhibits a low battery volume expansion rate after high-temperature storage, and excellent low-temperature charging performance, room-temperature cycle capacity retention rate, and energy density.

In some embodiments, based on the mass of the electrolytic solution, the mass content of the second component is 0.1% to 5%. In some embodiments, based on the total mass of the electrolytic solution, the mass content of the second component is optionally 0.1%, 1%, 2%, 3%, 4%, 5%, or any numerical value therebetween.

When the mass content of the second component is within an appropriate range, the room-temperature cycle capacity retention rate and the low-temperature charging performance of the battery can be further improved, and at the same time, the low battery volume expansion rate after high-temperature storage is balanced.

In some embodiments, the electrolytic solution includes an electrolyte salt selected from at least one of NaPF₆, NaBF₄, NaN(SO₂F)₂(NaFSI), NaClO₄, NaAsF₆, NaB(C₂O₄)₂(NaBOB), NaBF₂(C₂O₄)(NaDFOB), NaN(SO₂RF)₂, and NaN(SO₂F)(SO₂RF), where RF represents C_{b}F_{2b+1}, and b is an integer from 1 to 10, optionally an integer from 1 to 3.

In some embodiments, the electrolyte salt is selected from one or more of NaPF₆, NaN(SO₂F)₂, NaN(CF₃SO₂)₂, NaB(C₂O₄)₂, and NaBF₂(C₂O₄). In some embodiments, the electrolyte salt is selected from one or more of NaPF₆, NaN(SO₂RF)₂, and NaBF₂(C₂O₄). In some embodiments, RF is -CF₃, -C₂F₅, or -CF₂CF₂CF₃.

In some embodiments, the electrolytic solution includes a solvent including at least one of a chain carbonate, a chain carboxylate, a cyclic carbonate, an ether solvent, a sulfone solvent, and a nitrile solvent. In some embodiments, the chain carbonate includes at least one of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some embodiments, the chain carbonate includes at least one of dimethyl carbonate (DMC), diethyl carbonate (DEC), ethyl methyl carbonate (EMC), and methyl propyl carbonate (MPC). In some embodiments, the chain carboxylate includes at least one of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some embodiments, the chain carboxylate includes at least one of methyl propionate (MP), ethyl propionate (EP), propyl propionate (PP), methyl acetate (MA), ethyl acetate (EA), and propyl acetate (PA). In some embodiments, the ether solvent includes at least one of dioxolane (DOL), tetrahydrofuran (THF), 2-methyl tetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

### [Positive Electrode Plate]

A positive electrode plate generally includes a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, an aluminum foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, and the like) on a polymer material substrate (such as a substrate made of polypropylene (PP), polyethylene terephthalate (PET), polybutylene terephthalate (PBT), polystyrene (PS), and polyethylene (PE)).

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Separator]

In some embodiments, the secondary battery further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, which is not specified. When the separator is a multi-layer composite film, the materials of the layers may be the same or different, which is not specified.

In some embodiments, the positive electrode plate, the negative electrode plate, and the separator may be manufactured into an electrode assembly through a winding process or a stacking process.

In some embodiments, the secondary battery may include an outer packaging. The outer packaging may be configured to package the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

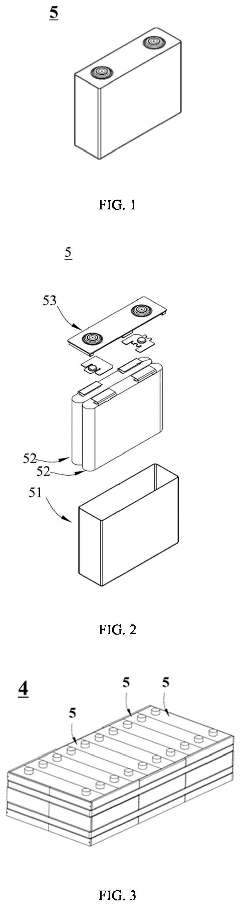

In the present application, the shape of the sodium secondary battery includes, but is not limited to, a cylindrical shape, a prismatic shape, or any other shape. For example, FIG. 1 shows a sodium secondary battery 5 having a prismatic structure as one example.

In some embodiments, referring to FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution infiltrates into the electrode assembly 52. The number of the electrode assemblies 52 included in the sodium secondary battery 5 may be one or more, and those skilled in the art can select the number according to specific and actual needs.

In some embodiments, the sodium secondary battery may be assembled into a battery module. The number of sodium secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of sodium secondary batteries 5 may be sequentially arranged in the length direction of the battery module 4. Certainly, the arrangement may also be in any other manner. Further, the plurality of sodium secondary batteries 5 may be fixed by a fastener.

Optionally, the battery module 4 may further include a shell having an accommodating space in which the plurality of sodium secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

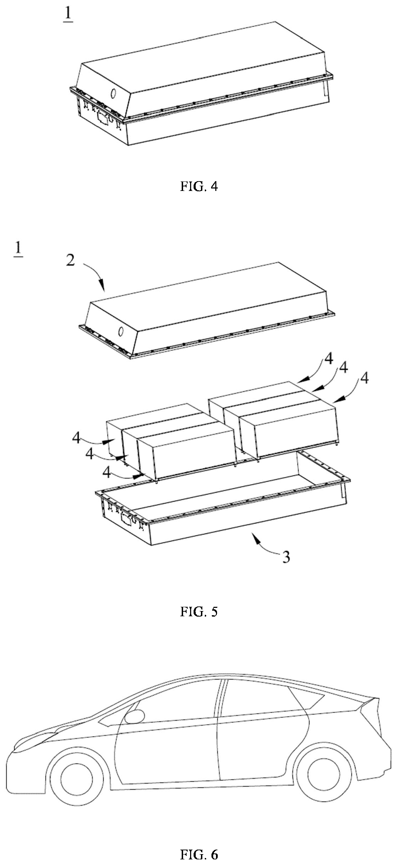

FIGs. 4 and 5 show a battery pack 1 as one example. Referring to FIGs. 4 and 5, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the sodium secondary battery, the battery module, or the battery pack provided in the present application. The sodium secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a sodium secondary battery, a battery module, or a battery pack may be selected based on the use requirements of the electric device.

FIG. 6 shows an electric device as one example. The electric device is a pure electric vehicle, a hybrid electric vehicle, a plug-in hybrid electric vehicle, or the like. To meet the requirements of the electric device for high power and high energy density of the sodium secondary battery, a battery pack or a battery module may be used.

As another example, the device may be a mobile phone, a tablet computer, a laptop computer, or the like. The device is generally required to be light and thin, and a sodium secondary battery may thus be used as a power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### I. Preparation Method

### Example 1:

### 1) Electrolytic solution

In a glove box under an argon atmosphere (H₂O content < 10 ppm, O₂ content < 1 ppm), a sodium salt sodium hexafluorophosphate (NaPF₆) was dissolved in ethyl methyl carbonate (EMC), and the first component represented by formula I-2 was then added. The mixture was uniformly stirred to obtain an electrolytic solution with a sodium salt concentration of 1 mol/L. Based on the total mass of the electrolytic solution, the mass content of the first component is 30%,

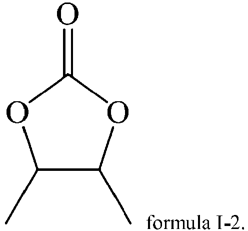

### 2) Preparation of positive electrode active material

Preparation ofNa_{7/9}Cu_{2/9}Fe_{1/9}Mn_{2/3}O₂: Precursors of Na₂CO₃ (0.39 mol), CuO (0.22 mol), Fe₂O₃ (0.06 mol), and MnO₂ (0.67 mol) were ball-milled in a ball mill with ethanol as a dispersant for 12 h. After drying, the uniformly mixed powder was pressed into a tablet at 20 MPa and sintered at 900 °C for 12 h to obtain the product. The sintered powder needed to be quickly transferred to a glove box for storage.

### 3) Preparation of positive electrode plate

The positive electrode active material Na_{7/9}Cu_{2/9}Fe_{1/9}Mn_{2/3}O₂, a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

### 4) Preparation of negative electrode active material H1

Biomass was calcined in a tube furnace under an argon atmosphere at 800 °C for 2 h, then washed with hydrochloric acid and deionized water, and dried. The biomass was ground for 3 h and then calcined in a tube furnace under an argon atmosphere at 1550 °C for 4 h to obtain a target active material H1. The discharge-specific capacity of the negative electrode active material H1 was 334 mAh/g. The ratio of the actual discharge-specific capacity of the negative electrode active material measured by using a three-stage stepwise discharge method in which the material was first discharged at the rate of 0.05C and then discharged at currents of 40 µA and 10 µA in the voltage range of 0.5 V to 0.05 V to the discharge-specific capacity of the negative electrode active material was 0.5. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the discharge-specific capacity of the negative electrode active material was 0.18. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the discharge-specific capacity of the negative electrode active material was 0.32.

### 5) Preparation of negative electrode plate

The negative electrode active material H1, a conductive agent acetylene black, a binder styrene-butadiene rubber (SBR), and a thickener sodium carboxymethylcellulose (CMC) were well stirred and uniformly mixed in a deionized water solvent system at a weight ratio of 90:4:4:2. A certain amount of CaO was added to enable the mass content of the calcium element in the dry material to be 500 ppm to obtain a negative electrode slurry. The negative electrode slurry was uniformly applied onto a negative electrode current collector aluminum foil with a thickness of 8 µm in an amount of 0.14 g (dry weight)/1540.25 mm². The aluminum foil was aired at room temperature, transferred to an oven for drying at 120 °C for 1 h, and then subjected to cold pressing and slitting to obtain a negative electrode plate.

### 6) Separator

A porous polymer film made of 9 µm polyethylene (PE) was used as the separator.

### 7) Preparation of battery

The positive electrode plate, the separator, and the negative electrode plate were stacked in sequence, with the separator positioned between the positive electrode plate and the negative electrode plate to isolate the two. The stack was wound to obtain a bare cell. The bare cell was welded to the tabs and placed in an outer packaging, and the electrolytic solution prepared above was injected into the dried battery cell. After procedures such as packaging, standing, formation, shaping, and capacity testing, the sodium secondary battery product of Example 1 was obtained.

### Examples 2 to 6

Compared with Example 1, the first component was separately replaced by compounds represented by formula I-1, formula I-3, formula I-4, formula I-5, and formula I-6, where the first components represented by formula I-1, formula I-3, formula I-4, formula I-5, and formula I-6 were as follows:

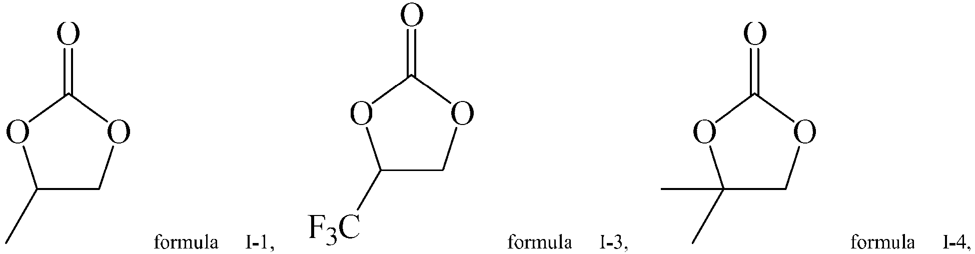

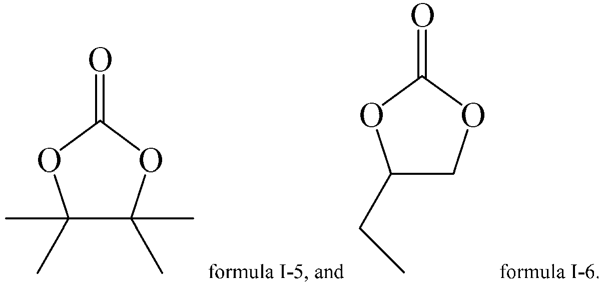

### Examples 7 to 17

Compared with Example 1, in Examples 7 to 17, the mass content of the first component in the electrolytic solution and the preparation process of the negative electrode plate were adjusted, and the ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.5 V to 0.05 V to the discharge-specific capacity of the negative electrode active material, or the ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the total discharge-specific capacity of the negative electrode active material, or the ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the total discharge-specific capacity of the negative electrode active material was accordingly adjusted. For specific parameters, reference is made to Tables 1 and 2.

### Preparation of negative electrode active material H2 in Examples 7 and 12:

Biomass was calcined in a tube furnace under an argon atmosphere at 800 °C for 2 h, then washed with hydrochloric acid and deionized water, and dried. The biomass was ground for 3.5 h and then calcined in a tube furnace under an argon atmosphere at 1600 °C for 5 h to obtain a target active material H2. The discharge-specific capacity of the negative electrode active material H2 was 357 mAh/g. The ratio of the actual discharge-specific capacity of the negative electrode active material measured by using a three-stage stepwise discharge method in which the material was first discharged at the rate of 0.05C and then discharged at currents of 40 µA and 10 µA in the voltage range of 0.5 V to 0.05 V to the discharge-specific capacity of the negative electrode active material was 0.35. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the discharge-specific capacity of the negative electrode active material was 0.2. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the discharge-specific capacity of the negative electrode active material was 0.45.

### Preparation of negative electrode active material H3 in Example 13:

Biomass was calcined in a tube furnace under an argon atmosphere at 800 °C for 2 h, then washed with hydrochloric acid and deionized water, and dried. The biomass was ground for 4 h and then calcined in a tube furnace under an argon atmosphere at 1550 °C for 5 h to obtain a target active material H3. The discharge-specific capacity of the negative electrode active material H3 was 348 mAh/g. The ratio of the actual discharge-specific capacity of the negative electrode active material measured by using a three-stage stepwise discharge method in which the material was first discharged at the rate of 0.05C and then discharged at currents of 40 µA and 10 µA in the voltage range of 0.5 V to 0.05 V to the discharge-specific capacity of the negative electrode active material was 0.40. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the discharge-specific capacity of the negative electrode active material was 0.26. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the discharge-specific capacity of the negative electrode active material was 0.34.

### Preparation of negative electrode active material H4 in Example 14:

Biomass was calcined in a tube furnace under an argon atmosphere at 800 °C for 2 h, then washed with hydrochloric acid and deionized water, and dried. The biomass was ground for 3 h and then calcined in a tube furnace under an argon atmosphere at 1350 °C for 4 h to obtain a target active material H4. The discharge-specific capacity of the negative electrode active material H4 was 327 mAh/g. The ratio of the actual discharge-specific capacity of the negative electrode active material measured by using a three-stage stepwise discharge method in which the material was first discharged at the rate of 0.05C and then discharged at currents of 40 µA and 10 µA in the voltage range of 0.5 V to 0.05 V to the discharge-specific capacity of the negative electrode active material was 0.7. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the discharge-specific capacity of the negative electrode active material was 0.18. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the discharge-specific capacity of the negative electrode active material was 0.12.

### Preparation of negative electrode active material H5 in Example 15:

Biomass was calcined in a tube furnace under an argon atmosphere at 800 °C for 2 h, then washed with hydrochloric acid and deionized water, and dried. The biomass was ground for 2 h and then calcined in a tube furnace under an argon atmosphere at 1600 °C for 3 h to obtain a target active material H5. The discharge-specific capacity of the negative electrode active material H5 was 340 mAh/g. The ratio of the actual discharge-specific capacity of the negative electrode active material measured by using a three-stage stepwise discharge method in which the material was first discharged at the rate of 0.05C and then discharged at currents of 40 µA and 10 µA in the voltage range of 0.5 V to 0.05 V to the discharge-specific capacity of the negative electrode active material was 0.5. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the discharge-specific capacity of the negative electrode active material was 0.1. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the discharge-specific capacity of the negative electrode active material was 0.4.

### Preparation of negative electrode active material H6 in Example 16;

Biomass was calcined in a tube furnace under an argon atmosphere at 800 °C for 2 h, then washed with hydrochloric acid and deionized water, and dried. The biomass was ground for 5 h and then calcined in a tube furnace under an argon atmosphere at 1450 °C for 3 h to obtain a target active material H6. The discharge-specific capacity of the negative electrode active material H6 was 330 mAh/g. The ratio of the actual discharge-specific capacity of the negative electrode active material measured by using a three-stage stepwise discharge method in which the material was first discharged at the rate of 0.05C and then discharged at currents of 40 µA and 10 µA in the voltage range of 0.5 V to 0.05 V to the discharge-specific capacity of the negative electrode active material was 0.5. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the discharge-specific capacity of the negative electrode active material was 0.3. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the discharge-specific capacity of the negative electrode active material was 0.2.

### Preparation of negative electrode active material H7 in Example 17:

Biomass was calcined in a tube furnace under an argon atmosphere at 800 °C for 2 h, then washed with hydrochloric acid and deionized water, and dried. The biomass was ground for 6 h and then calcined in a tube furnace under an argon atmosphere at 1300 °C for 3 h to obtain a target active material H7. The discharge-specific capacity of the negative electrode active material H7 was 298 mAh/g. The ratio of the actual discharge-specific capacity of the negative electrode active material measured by using a three-stage stepwise discharge method in which the material was first discharged at the rate of 0.05C and then discharged at currents of 40 µA and 10 µA in the voltage range of 0.5 V to 0.05 V to the discharge-specific capacity of the negative electrode active material was 0.55. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the discharge-specific capacity of the negative electrode active material was 0.35. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the discharge-specific capacity of the negative electrode active material was 0.1.

### Example 18

Compared with Example 14, the mass content of the first component in the electrolytic solution was adjusted. For specific parameters, reference is made to Table 1.

### Example 19

Compared with Example 1, the preparation method for the negative electrode plate was modified, so that the negative electrode film layer did not contain the Ca element.

### Examples 20 to 23

Compared with Example 1, the mass content of the Ca element in the negative electrode film layer was adjusted. For specific parameters, reference is made to Table 2.

The preparation methods for the sodium secondary battery in Examples 24 to 28 were substantially the same as that in Example 1, except that the mass content of the copper element in the positive electrode active material and/or the mass content of the first component was adjusted by adjusting the preparation processes of the positive electrode active material and the positive electrode plate. For specific parameters, reference is made to Tables 1 and 3.

Positive electrode plate of Example 24: Precursors of Na₂CO₃ (0.25 mol), Fe₂O₃ (0.25 mol), and MnO₂ (0.5 mol) were ball-milled in a ball mill with ethanol as a dispersant for 12 h. After drying, the uniformly mixed powder was pressed into a tablet at 20 MPa and sintered at 900 °C for 12 h to obtain the product. The sintered powder needed to be quickly transferred to a glove box for storage to obtain the positive electrode active material Na_{1/2}Fe_{1/2}Mn_{1/2}O₂.

The positive electrode active material Na_{1/2}Fe_{1/2}Mn_{1/2}O₂, a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

Positive electrode plates of Examples 25 and 26: Precursors of Na₂CO₃ (0.45 mol), CuO (0.4 mol), Fe₂O₃ (0.05 mol), and MnO₂ (0.5 mol) were ball-milled in a ball mill with ethanol as a dispersant for 12 h. After drying, the uniformly mixed powder was pressed into a tablet at 20 MPa and sintered at 900 °C for 12 h to obtain the product. The sintered powder needed to be quickly transferred to a glove box for storage to obtain the positive electrode active material Na_{9/10}Cu_{2/5}Fe_{1/10}Mn_{1/2}O₂.

The positive electrode active material Na_{9/10}Cu_{2/5}Fe_{1/10}Mn_{1/2}O₂, a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate. Based on the mass of the electrolytic solution, the mass content of the first component in Example 25 was 30%, and the mass content of the first component in Example 26 was 10%.

Positive electrode plate of Example 27: The positive electrode active material (50 wt% Na_{7/9}Cu_{2/9}Fe_{1/9}Mn_{2/3}O₂ and 50 wt% Na_{9/10}Cu_{2/5}Fe_{1/10}Mn_{1/2}O₂), a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

Positive electrode plate of Example 28: The positive electrode active material (50 wt% Na_{1/2}Fe_{1/2}Mn_{1/2}O₂ and 50 wt% Na_{7/9}Cu_{2/9}Fe_{1/9}Mn_{2/3}O₂), a conductive agent acetylene black, and a binder polyvinylidene fluoride (PVDF) were well stirred and uniformly mixed in an N-methylpyrrolidone solvent system at a weight ratio of 90:5:5 to give a positive electrode slurry. The positive electrode slurry was uniformly applied onto a positive electrode current collector aluminum foil with a thickness of 13 µm in an amount of 0.28 g (dry weight)/1540.25 mm². The aluminum foil was aired at room temperature, transferred to an oven for drying at 120 °C for 1 h, and then subjected to cold pressing and slitting to obtain a positive electrode plate.

### Examples 29 to 32

Compared with Example 1, a second component ethylene carbonate was added to the electrolytic solutions of Examples 29 to 32, and the mass content of the second component was adjusted. For specific parameters, reference is made to Table 1.

### Comparative Example 1

Compared with Example 7, the mass content of the first component of the electrolytic solution in Comparative Example 1 was 5%. For other specific parameters, reference is made to Table 1.

### Comparative Example 2

Compared with Example 14, the mass content of the first component of the electrolytic solution in Comparative Example 2 was 90%. For other specific parameters, reference is made to Table 1.

### Comparative Example 3

Compared with Example 16, the first component in the electrolytic solution in Comparative Example 3 was ethylene carbonate. For other specific parameters, reference is made to Table 1.

### II. Performance Test

### 1. Determination of mass content of Ca element in negative electrode film layer

The mass proportion of the calcium element in the negative electrode film layer can be determined by inductively coupled plasma atomic emission spectrometry according to General Rules EPA 6010D-2014. The mass proportion of the silicon element in the negative electrode film layer was calculated by dividing the mass of the calcium element in the negative electrode film layer sample by the mass of the negative electrode film layer sample.

### 2. Determination of mass content of Cu element in positive electrode active material

The mass proportion of the Cu element in the positive electrode active material can be determined by inductively coupled plasma atomic emission spectrometry according to General Rules EPA 6010D-2014. The mass proportion of the copper element in the positive electrode active material was calculated by dividing the mass of the copper element in the positive electrode active material sample by the mass of the positive electrode active material sample.

### 3. Test for actual discharge-specific capacity of negative electrode active material

The negative electrode plates in the comparative examples and the examples were punched into small discs with a diameter of 14 mm to be used as a positive electrode in a button battery. A sodium metal sheet was used as a negative electrode, a polypropylene film was used as a separator, and a 1.3 mol/L sodium hexafluorophosphate solution was used as an electrolytic solution. The electrolytic solution contained ethylene carbonate, dimethyl carbonate, and ethyl methyl carbonate as solvents in a mass ratio of 1:2:2. The solvents were used as a test electrolytic solution to assemble the button battery, and the battery was subjected to a constant current charging and discharging test in the voltage range of 0.005 V to 1.5 V. In the first discharging process, the battery was discharged to 0.005 V at a constant current rate of 0.05C, discharged to 0.005 V at a constant current rate of 40 µA after standing until the voltage returned to a stable value, and discharged to 0.005 V at a constant current rate of 10 µA after standing until the voltage returned to a stable value; the battery was charged to 1.5 V at a constant current rate of 0.05C in the charging process, thereby completing the first charging and discharging cycle. Then, the battery was discharged to 0.005 V at a constant current rate of 0.05C, discharged to 0.005 V at a constant current rate of 40 µA after standing until the voltage returned to a stable value, and discharged to 0.005 V at a constant current rate of 10 µA after standing until the voltage returned to a stable value; the battery was charged to 1.5 V at a constant current rate of 0.05C in the charging process, thereby completing the second cycle, and obtaining charge and discharge curves of the second charging and discharging cycle. In the discharge curve of the second charging and discharging cycle, the discharge capacity (mAh) selected from the voltage range of 1.5 V to 0.5 V was divided by the mass (g) of the negative electrode active material in the negative electrode plate, and this was denoted as the actual discharge-specific capacity of the negative electrode active material at 1.5 V to 0.5 V (in mAh/g). Similarly, in the discharge curve of the second charging and discharging cycle, the discharge capacity (mAh) selected from the voltage range of 0.5 V to 0.05 V was divided by the mass (g) of the negative electrode active material in the negative electrode plate, and this was denoted as the actual discharge-specific capacity of the negative electrode active material at 0.5 V to 0.05 V (in mAh/g). Similarly, in the discharge curve of the second charging and discharging cycle, the discharge capacity (mAh) selected from the voltage range of 0.05 V to 0.005 V was divided by the mass (g) of the negative electrode active material in the negative electrode plate, and this was denoted as the actual discharge-specific capacity of the negative electrode active material at 0.05 V to 0.005 V (in mAh/g). Similarly, in the discharge curve of the second charging and discharging cycle, the discharge capacity (mAh) selected from the voltage range of 1.5 V to 0.005 V was divided by the mass (g) of the negative electrode active material in the negative electrode plate, and this was denoted as the total discharge-specific capacity of the negative electrode active material (in mAh/g).

### 4. Volume change rate under high-temperature and low-pressure storage

At 25 °C, the new sodium secondary batteries prepared in the examples and comparative examples were left to stand for 5 min, charged to 4.0 V at a constant current rate of 1C, charged at a constant voltage until the current was less than or equal to 0.05C, then left to stand for 5 min, and discharged to 1.5 V at a constant current rate of 1C. The volume V1 of the battery was tested by the water displacement method. The battery was then placed in an oven at 55 °C and stored for 10 days, and then taken out, with the test volume being V2. The volume change rate of the battery = (V2 - V1)N1 × 100%.

### 5. Low-temperature charging performance at 0 °C

A three-electrode battery containing a reference was prepared. The reference electrode was sodium vanadium phosphate. At 25 °C, the battery was charged at a constant current of 1C to a voltage of 4.0 V, charged at a constant voltage until the current was less than or equal to 0.05C, then left to stand for 5 min, and discharged at a constant current rate of 1C to 1.5 V. The discharge capacity was recorded as C1. The battery was then placed in an environment at 0 °C and left to stand for 2 h, and charged at a constant current of 1C to a voltage of 4.0 V. The charge capacity, before the potential of the negative electrode compared with the reference potential was -3.377 V, was obtained and recorded as C2, and the charging capacity of the battery at 0 °C = C2/C1 × 100%.

### 6. Mass energy density of battery

Capacity test of the battery cell: The battery cell was allowed to stand at 25 °C for 2 h to ensure that the temperature of the battery cell was 25 °C. At 25 °C, the battery cell was charged at 0.33C to 4.0 V, and constant-voltage charging was continued at 4.0 V until the current reached 0.05C, at which point charging was terminated (where C represents the rated capacity of the battery cell). The battery cell was allowed to stand at 25 °C for 1 h. At 25 °C, the battery cell was discharged at 0.33C to 1.5 V, and the total discharge capacity and total discharge energy of the battery cell were recorded as C0 and E0, respectively.

Battery cell weight measurement: The battery cell was placed on an electronic balance until the weight stabilized, and the battery cell weight M0 was recorded.

Energy density calculation: The energy density of the battery cell was calculated as: battery cell discharge energy E0/battery cell weight M0.

### 7. Cycle capacity retention rate

At 25 °C, the prepared battery was charged at a constant current of 0.5C to 3.8 V, charged at a constant current of 0.2C to 4.0 V, then charged at a constant voltage of 4.0 V until the current dropped to 0.05C, left to stand for 10 min, and then discharged at a constant current of 0.5C to 1.5 V. This was the first charging/discharging cycle of the battery, and the discharge capacity of this cycle was recorded as the discharge capacity of the first cycle of the battery (C0). The above procedure was repeated for the same battery, the discharge capacity (C1) of the battery after 800 cycles was recorded, and the capacity retention rate after 800 cycles = C1/C0 × 100%. The test process of the comparative examples and other examples was the same as above.

### III. Analysis of Test Results of Examples and Comparative Examples

The batteries of examples and comparative examples were prepared according to the methods described above, and various performance parameters were measured. The results are shown in the table below.

**Table 1**

| | Electrolytic solution | | | |
|---|---|---|---|---|
| Serial number | Type of first component | Mass content b of first component | Type of second component | Mass content of second component |
| Example 1 | Formula I-2 | 30% | / | / |
| Example 2 | Formula I-1 | 30% | / | / |
| Example 3 | Formula I-3 | 30% | / | / |
| Example 4 | Formula I-4 | 30% | / | / |
| Example 5 | Formula I-5 | 30% | / | / |
| Example 6 | Formula I-6 | 30% | / | / |
| Example 7 | Formula I-2 | 10% | / | / |
| Example 8 | Formula I-2 | 5% | / | / |
| Example 9 | Formula I-2 | 10% | / | / |
| Example 10 | Formula I-2 | 50% | / | / |
| Example 11 | Formula I-2 | 80% | / | / |
| Example 12 | Formula I-2 | 30% | / | / |
| Example 13 | Formula I-2 | 30% | / | / |
| Example 14 | Formula I-2 | 30% | / | / |
| Example 15 | Formula 1-2 | 30% | / | / |
| Example 16 | Formula I-2 | 30% | / | / |
| Example 17 | Formula I-2 | 30% | / | / |
| Example 18 | Formula I-2 | 80% | / | / |
| Example 19 | Formula I-2 | 30% | / | / |
| Example 20 | Formula I-2 | 30% | / | / |
| Example 21 | Formula I-2 | 30% | / | / |
| Example 22 | Formula I-2 | 30% | / | / |
| Example 23 | Formula I-2 | 30% | / | / |
| Example 24 | Formula I-2 | 30% | / | / |
| Example 25 | Formula I-2 | 30% | / | / |
| Example 26 | Formula I-2 | 10% | / | / |
| Example 27 | Formula I-2 | 30% | / | / |
| Example 28 | Formula I-2 | 30% | / | / |
| Example 29 | Formula I-2 | 30% | Vinylene carbonate | 0.01% |
| Example 30 | Formula I-2 | 30% | Vinylene carbonate | 0.10% |
| Example 31 | Formula I-2 | 30% | Vinylene carbonate | 5% |
| Example 32 | Formula I-2 | 30% | Vinylene carbonate | 10% |
| Comparative Example 1 | Formula I-2 | 5% | / | / |
| Comparative Example 2 | Formula I-2 | 90% | / | / |
| Comparative Example 3 | Ethylene carbonate | 30% | / | / |

**Table 2**

| Negative electrode plate | | | | | | |
|---|---|---|---|---|---|---|
| Serial number | Negative electrode active material | Discharge-specific capacity proportion c in a voltage range of 1.5 V to 0.5 V | Discharge-specific capacity proportion a in a voltage range of 0.5 V to 0.05 V | Discharge-specific capacity in a voltage range of 0.5 V to 0.05 V (mAh/g) | Discharge-specific capacity proportion d in a voltage range of 0.05 V to 0.005 V | Mass content e of Ca element (ppm) |
| Example 1 | H1 | 0.18 | 0.50 | 167 | 0.32 | 500 |
| Example 2 | H1 | 0.18 | 0.50 | 167 | 0.32 | 500 |
| Example 3 | H1 | 0.18 | 0.50 | 167 | 0.32 | 500 |
| Example 4 | H1 | 0.18 | 0.50 | 167 | 0.32 | 500 |
| Example 5 | H1 | 0.18 | 0.50 | 167 | 0.32 | 500 |
| Example 6 | H1 | 0.18 | 0.50 | 167 | 0.32 | 500 |
| Example 7 | H2 | 0.20 | 0.35 | 125 | 0.45 | 500 |
| Example 8 | H1 | 0.18 | 0.50 | 167 | 0.32 | 500 |
| Example 9 | H1 | 0.18 | 0.50 | 167 | 0.32 | 500 |
| Example 10 | H1 | 0.18 | 0.50 | 167 | 0.32 | 500 |
| Example 11 | H1 | 0.18 | 0.50 | 167 | 0.32 | 500 |
| Example 12 | H2 | 0.20 | 0.35 | 125 | 0.45 | 500 |
| Example 13 | H3 | 0.26 | 0.40 | 139 | 0.34 | 500 |
| Example 14 | H4 | 0.18 | 0.70 | 229 | 0.12 | 500 |
| Example 15 | H5 | 0.10 | 0.50 | 170 | 0.40 | 500 |
| Example 16 | H6 | 0.30 | 0.50 | 165 | 0.20 | 500 |
| Example 17 | H7 | 0.35 | 0.55 | 164 | 0.10 | 500 |
| Example 18 | H4 | 0.18 | 0.70 | 229 | 0.12 | 500 |
| Example 19 | H1 | 0.18 | 0.50 | 167 | 0.32 | / |
| Example 20 | H1 | 0.18 | 0.50 | 167 | 0.32 | 1 |
| Example 21 | H1 | 0.18 | 0.50 | 167 | 0.32 | 2 |
| Example 22 | H1 | 0.18 | 0.50 | 167 | 0.32 | 1000 |
| Example 23 | H1 | 0.18 | 0.50 | 167 | 0.32 | 2000 |
| Example 24 | H1 | 0.18 | 0.50 | 167 | 0.32 | 500 |
| Example 25 | H1 | 0.18 | 0.50 | 167 | 0.32 | 500 |
| Example 26 | H1 | 0.18 | 0.50 | 167 | 0.32 | 500 |
| Example 27 | H1 | 0.18 | 0.50 | 167 | 0.32 | 500 |
| Example 28 | H1 | 0.18 | 0.50 | 167 | 0.32 | 500 |
| Example 29 | H1 | 0.18 | 0.50 | 167 | 0.32 | 500 |
| Example 30 | H1 | 0.18 | 0.50 | 167 | 0.32 | 500 |
| Example 31 | H1 | 0.18 | 0.50 | 167 | 0.32 | 500 |
| Example 32 | H1 | 0.18 | 0.50 | 167 | 0.32 | 500 |
| Comparative Example 1 | H2 | 0.20 | 0.35 | 125 | 0.45 | 500 |
| Comparative Example 2 | H4 | 0.18 | 0.70 | 229 | 0.12 | 500 |
| Comparative Example 3 | H6 | 0.30 | 0.50 | 165 | 0.20 | 500 |

**Table 3**

| Negative electrode plate | | | Positive electrode plate | | Battery | | | |
|---|---|---|---|---|---|---|---|---|
| Serial number | a+b | e/d | Mass content f of Cu element | b/f | Volume change rate under low-pressure storage (%) | Low-temperature charging performance (%) | Energy density (Wh/kg) | Cycle capacity retention rate (%) |
| Example 1 | 0.80 | 1.56E-03 | 13% | 2.31 | 15 | 75 | 150 | 78 |
| Example 2 | 0.80 | 1.56E-03 | 13% | 2.31 | 16 | 76 | 151 | 78 |
| Example 3 | 0.80 | 1.56E-03 | 13% | 2.31 | 14 | 72 | 150 | 76 |
| Example 4 | 0.80 | 1.56E-03 | 13% | 2.31 | 13 | 74 | 149 | 77 |
| Example 5 | 0.80 | 1.56E-03 | 13% | 2.31 | 16 | 77 | 150 | 80 |
| Example 6 | 0.80 | 1.56E-03 | 13% | 2.31 | 14 | 75 | 149 | 79 |
| Example 7 | 0.45 | 1.11E-03 | 13% | 0.77 | 50 | 63 | 155 | 75 |
| Example 8 | 0.55 | 1.56E-03 | 13% | 0.38 | 35 | 76 | 147 | 78 |
| Example 9 | 0.60 | 1.56E-03 | 13% | 0.77 | 20 | 78 | 149 | 79 |
| Example 10 | 1.00 | 1.56E-03 | 13% | 3.85 | 13 | 72 | 150 | 77 |
| Example 11 | 1.30 | 1.56E-03 | 13% | 6.15 | 12 | 58 | 151 | 76 |
| Example 12 | 0.65 | 1.11E-03 | 13% | 2.31 | 36 | 62 | 156 | 76 |
| Example 13 | 0.70 | 1.47E-03 | 13% | 2.31 | 25 | 70 | 154 | 78 |
| Example 14 | 1.00 | 4.17E-03 | 13% | 2.31 | 12 | 81 | 145 | 80 |
| Example 15 | 0.80 | 1.25E-03 | 13% | 2.31 | 40 | 68 | 152 | 77 |
| Example 16 | 0.80 | 2.50E-03 | 13% | 2.31 | 45 | 78 | 146 | 81 |
| Example 17 | 0.85 | 5.00E-03 | 13% | 2.31 | 47 | 82 | 140 | 81 |
| Example 18 | 1.50 | 4.17E-03 | 13% | 6.15 | 11 | 61 | 146 | 79 |
| Example 19 | 0.80 | / | 13% | 2.31 | 55 | 65 | 150 | 69 |
| Example 20 | 0.80 | 3.13E-06 | 13% | 2.31 | 50 | 68 | 149 | 73 |
| Example 21 | 0.80 | 6.25E-06 | 13% | 2.31 | 44 | 79 | 151 | 75 |
| Example 22 | 0.80 | 3.13E-03 | 13% | 2.31 | 11 | 74 | 149 | 81 |
| Example 23 | 0.80 | 6.25E-03 | 13% | 2.31 | 8 | 62 | 148 | 72 |
| Example 24 | 0.80 | 1.56E-03 | / | / | 6 | 75 | 151 | 70 |
| Example 25 | 0.80 | 1.56E-03 | 23% | 1.30 | 31 | 76 | 150 | 83 |
| Example 26 | 0.60 | 1.56E-03 | 23% | 0.43 | 23 | 77 | 149 | 82 |
| Example 27 | 0.80 | 1.56E-03 | 18% | 1.67 | 25 | 74 | 151 | 81 |
| Example 28 | 0.80 | 1.56E-03 | 6.5% | 4.62 | 9 | 75 | 150 | 75 |
| Example 29 | 0.80 | 1.56E-03 | 13% | 2.31 | 15 | 75 | 149 | 79 |
| Example 30 | 0.80 | 1.56E-03 | 13% | 2.31 | 14 | 74 | 150 | 81 |
| Example 31 | 0.80 | 1.56E-03 | 13% | 2.31 | 16 | 68 | 148 | 83 |
| Example 32 | 0.80 | 1.56E-03 | 13% | 2.31 | 23 | 55 | 150 | 70 |
| Comparative Example 1 | 0.40 | 1.11E-03 | 13% | 0.38 | 100 | 60 | 155 | 68 |
| Comparative Example 2 | 1.60 | 4.17E-03 | 13% | 6.92 | 70 | 57 | 145 | 67 |
| Comparative | / | 2.50E-03 | 13% | 2.31 | 135 | 50 | 145 | 66 |
| Example 3 | | | | | | | | |
| Note: *where E represents the scientific notation to the power of 10, and 1.56E-03 is 1.56 × 10⁻³. | | | | | | | | |

As can be seen from the above results, the sodium secondary batteries in Examples 1 to 32 each included a negative electrode plate and an electrolytic solution, and the negative electrode plate included a negative electrode active material. The ratio of the actual discharge-specific capacity of the negative electrode active material measured by using the three-stage stepwise discharge method in which the material was first discharged at the rate of 0.05C and then discharged at the currents of 40 µA and 10 µA in the voltage range of 0.5 V to 0.05 V to the total discharge-specific capacity of the negative electrode active material was denoted as a.

The electrolytic solution includes a first component, and the first component is the compound according to any one of formula I-1 to formula I-6. Based on the total mass of the electrolytic solution, the mass content of the first component is b, and a and b satisfy: 0.45 ≤ a + b ≤ 1.5,

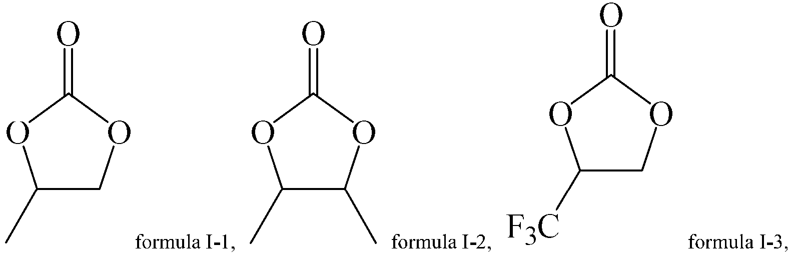

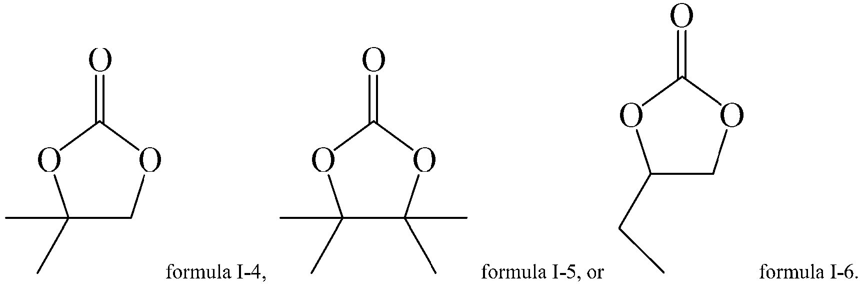

As can be seen from the comparison between Examples 1 to 32 and Comparative Examples 1 and 2, when a and b satisfy: 0.45 ≤ a + b ≤ 1.5, the volume expansion rate of the battery after high-temperature storage can be reduced, and the charging performance at a low temperature and the room-temperature cycle capacity retention rate can be improved.

As can be seen from the comparison between Examples 1 to 32 and Comparative Example 3, compared with the electrolytic solution containing ethylene carbonate as the first component, the electrolytic solution of the sodium secondary battery of the present application uses the compound represented by formula I as the first component, which can reduce the volume expansion rate of the battery after high-temperature storage, and improve the charging performance at a low temperature and the room-temperature cycle capacity retention rate.

As can be seen from the comparison between Examples 1, 9 and 10, and 12 to 17 and Examples 7 and 8, 11, and 18, when a and b satisfy: 0.6 ≤ a + b ≤ 1.2, the battery balances both the excellent low-temperature charging performance and room-temperature cycle capacity retention rate, and a high energy density.

As can be seen from Examples 1 to 18, the ratio a of the actual discharge-specific capacity of the negative electrode active material measured by using the three-stage stepwise discharge method in which the material was first discharged at the rate of 0.05C and then discharged at the currents of 40 µA and 10 µA in the voltage range of 0.5 V to 0.05 V to the total discharge-specific capacity of the negative electrode active material was 0.35 to 0.85. The battery exhibits a low battery volume expansion rate after high-temperature storage, excellent low-temperature charging performance, high energy density, and excellent room-temperature cycle capacity retention rate. As can be seen from the comparison between Examples 1, and 13 to 17 and Example 12, the ratio a of the actual discharge-specific capacity of the negative electrode active material measured by using the three-stage stepwise discharge method in which the material was first discharged at the rate of 0.05C and then discharged at the currents of 40 µA and 10 µA in the voltage range of 0.5 V to 0.05 V to the total discharge-specific capacity of the negative electrode active material was 0.4 to 0.7, which can further improve the low-temperature charging performance and the room-temperature cycle performance of the battery.

As can be seen from Examples 1 to 18, the ratio c of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the total discharge-specific capacity of the negative electrode active material was 0.05 to 0.35. The battery exhibits a low battery volume expansion rate after high-temperature storage, excellent low-temperature charging performance, high energy density, and excellent room-temperature cycle capacity retention rate. As can be seen from the comparison between Examples 1, and 12 to 16 and Example 17, the ratio c of the actual discharge-specific capacity of the negative electrode active material measured by using the three-stage stepwise discharge method in which the material was first discharged at the rate of 0.05C and then discharged at the currents of 40 µA and 10 µA in the voltage range of 1.5 V to 0.5 V to the total discharge-specific capacity of the negative electrode active material was 0.1 to 0.3, which can further reduce the volume expansion rate of the battery after high-temperature storage and improve the energy density of the battery.

As can be seen from Examples 1 to 18, the ratio d of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the total discharge-specific capacity of the negative electrode active material was 0.1 to 0.45. The battery exhibits a low battery volume expansion rate after high-temperature storage, excellent low-temperature charging performance, high energy density, and excellent room-temperature cycle capacity retention rate. As can be seen from the comparison between Examples 1, 13, and 15 and 16 and Examples 12, 14, and 17, the ratio d of the actual discharge-specific capacity of the negative electrode active material measured by using the three-stage stepwise discharge method in which the material was first discharged at the rate of 0.05C and then discharged at the currents of 40 µA and 10 µA in the voltage range of 0.05 V to 0.005 V to the total discharge-specific capacity of the negative electrode active material was 0.2 to 0.4. Both a low volume expansion rate after high-temperature storage and a high battery energy density are balanced.

As can be seen from Example 1 and Examples 8 to 11, when the mass proportion b of the first component in the electrolytic solution is 5% to 80% based on the total mass of the electrolytic solution, the battery exhibits a low battery volume expansion rate after high-temperature storage, and excellent low-temperature charging performance and room-temperature cycle capacity retention rate. As can be seen from the comparison between Examples 1, and 9 and 10 and Examples 8 and 11, when the mass proportion b of the first component in the electrolytic solution is 10% to 50% based on the total mass of the electrolytic solution, both the low volume expansion rate after high-temperature storage, and excellent low-temperature charging performance and room-temperature cycle capacity retention rate are balanced.

As can be seen from Examples 1 to 18, the actual discharge-specific capacity of the negative electrode active material in the voltage range of 0.5 V to 0.05 V was 120 mAh/g to 270 mAh/g. The battery exhibits a low battery volume expansion rate after high-temperature storage, excellent low-temperature charging performance and room-temperature cycle capacity retention rate, and high energy density.

As can be seen from the comparison among Example 1, Examples 20 to 23, and Example 19, the inclusion of the calcium element in the negative electrode film layer can reduce the volume expansion rate of the battery after high-temperature storage and improve the room-temperature cycle capacity retention rate of the battery.

As can be seen from Examples 1, 12 to 17, and 20 to 22 and Example 23, based on the total mass of the negative electrode film layer, the mass proportion of the calcium element in the negative electrode film layer is e, the ratio of the actual discharge-specific capacity of the negative electrode active material in the voltage range of 0.05 V to 0.005 V to the total discharge-specific capacity of the negative electrode active material is d, and when d and e satisfy: 3 × 10⁻⁶ ≤ e/d ≤ 6 × 10⁻³, the low-temperature charging performance and the room-temperature cycle capacity retention rate of the battery can be further improved.

As can be seen from Example 1 and Examples 20 to 23, based on the total mass of the negative electrode film layer, when the mass proportion e of the calcium element in the negative electrode film layer is 1 ppm to 2000 ppm, the battery exhibits a low battery volume expansion rate after high-temperature storage, and excellent low-temperature charging performance and room-temperature cycle capacity retention rate. As can be seen from the comparison between Examples 1, and 21 and 22 and Examples 20 and 23, when the mass proportion e of the calcium element in the negative electrode film layer is 2 ppm to 1000 ppm, the low-temperature charging performance and the room-temperature cycle capacity retention rate of the battery can be further improved.

As can be seen from Examples 1, 25, 27 and 28 and Example 26, the inclusion of the copper element in the positive electrode active material can further improve the room-temperature cycle performance of the battery.

As can be seen from the comparison between Examples 1, 9 to 11, 25, and 27 and 28 and Examples 8 and 26, the mass content of the first component is b based on the electrolytic solution, the mass content of the Cu element is f based on the mass of the positive electrode active material, and when b and f satisfy: b/f ≥ 0.5, the energy density of the battery can be improved, and at the same time, the battery exhibits a low battery volume expansion rate after high-temperature storage, and excellent low-temperature charging performance and room-temperature cycle capacity retention rate.

As can be seen from Example 1 and Examples 24 to 28, when the mass proportion of the copper element is less than or equal to 23% based on the total mass of the positive electrode active material, the battery exhibits a low battery volume expansion rate after high-temperature storage, and excellent low-temperature charging performance and room-temperature cycle capacity retention rate. As can be seen from the comparison between Examples 1, and 27 and 28 and Example 25, and between Example 9 and Example 26, when the mass proportion of the copper element is 6.5% to 18%, the battery balances both a low battery volume expansion rate after high-temperature storage and excellent low-temperature charging performance.

As can be seen from Examples 29 to 32 and Example 1, the addition of the second component to the electrolytic solution can improve the room-temperature cycle capacity retention rate of the battery. As can be seen from Examples 29 to 32, the mass content of the second component is 0.01% to 10%, and the battery exhibits a low battery volume expansion rate after high-temperature storage, and excellent low-temperature charging performance, room-temperature cycle capacity retention rate, and energy density. As can be seen from the comparison between Examples 30 and 31 and Examples 29 and 32, the mass content of the second component is 0.1% to 5%, which can further improve the room-temperature cycle capacity retention rate and the low-temperature charging performance of the battery while considering the low battery volume expansion rate after high-temperature storage.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A sodium secondary battery, comprising a negative electrode plate and an electrolytic solution,
wherein the negative electrode plate comprises a negative electrode active material, and a ratio of an actual discharge-specific capacity of the negative electrode active material measured by using a three-stage stepwise discharge method in which the material is first discharged at a rate of 0.05C and then discharged at currents of 40 µA and 10 µA in a voltage range of 0.5 V to 0.05 V to a total discharge-specific capacity of the negative electrode active material is denoted as a;
the electrolytic solution comprises a first component, wherein the first component comprises a compound represented by formula I; based on a total mass of the electrolytic solution, a mass content of the first component is b, 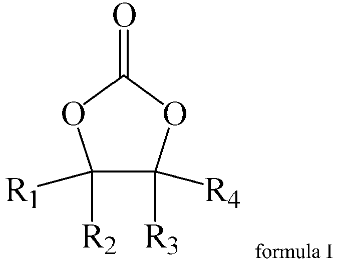
wherein R₁, R₂, R₃, and R₄ each independently comprise a hydrogen atom, a halogen atom, C₁₋₆ alkyl, C₁₋₆ haloalkyl, C₁₋₆ alkoxy, C₂₋₆ alkenyl, or C₂₋₆ alkynyl, and R₁, R₂, R₃, and R₄ do not represent hydrogen atoms simultaneously;
a and b satisfy: 0.45 ≤ a + b ≤ 1.5.

2. The sodium secondary battery according to claim 1, wherein the sodium secondary battery satisfies: 0.6 ≤ a + b ≤ 1.2.

3. The sodium secondary battery according to claim 1, wherein the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is 0.35 to 0.85.

4. The sodium secondary battery according to claim 1, wherein the ratio a of the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V to the total discharge-specific capacity of the negative electrode active material is 0.4 to 0.7.

5. The sodium secondary battery according to any one of claims 1 to 4, wherein a ratio c of the actual discharge-specific capacity of the negative electrode active material measured by using the three-stage stepwise discharge method in which the material is first discharged at the rate of 0.05C and then discharged at the currents of 40 µA and 10 µA in a voltage range of 1.5 V to 0.5 V to the total discharge-specific capacity of the negative electrode active material is 0.05 to 0.35.

6. The sodium secondary battery according to any one of claims 1 to 4, wherein a ratio c of the actual discharge-specific capacity of the negative electrode active material measured by using the three-stage stepwise discharge method in which the material is first discharged at the rate of 0.05C and then discharged at the currents of 40 µA and 10 µA in a voltage range of 1.5 V to 0.5 V to the total discharge-specific capacity of the negative electrode active material is 0.1 to 0.3.

7. The sodium secondary battery according to any one of claims 1 to 4, wherein a ratio d of the actual discharge-specific capacity of the negative electrode active material measured by using a three-stage discharge method in which the material is first discharged at the rate of 0.05C and then discharged at the currents of 40 µA and 10 µA in a voltage range of 0.05 V to 0.005 V to the total discharge-specific capacity of the negative electrode active material is 0.1 to 0.45.

8. The sodium secondary battery according to any one of claims 1 to 4, wherein a ratio d of the actual discharge-specific capacity of the negative electrode active material measured by using the three-stage stepwise discharge method in which the material is first discharged at the rate of 0.05C and then discharged at the currents of 40 µA and 10 µA in a voltage range of 0.05 V to 0.005 V to the total discharge-specific capacity of the negative electrode active material is 0.2 to 0.4.

9. The sodium secondary battery according to any one of claims 1 to 4, wherein based on a mass of the electrolytic solution, the mass content b of the first component is 5% to 80%.

10. The sodium secondary battery according to any one of claims 1 to 4, wherein based on a mass of the electrolytic solution, the mass content b of the first component is 10% to 50%.

11. The sodium secondary battery according to any one of claims 1 to 4, wherein the actual discharge-specific capacity of the negative electrode active material measured by using the three-stage stepwise discharge method in which the material is first discharged at the rate of 0.05C and then discharged at the currents of 40 µA and 10 µA in the voltage range of 0.5 V to 0.05 V is 120 mAh/g to 270 mAh/g.

12. The sodium secondary battery according to any one of claims 1 to 4, wherein the first component comprises one or more of the following compounds:

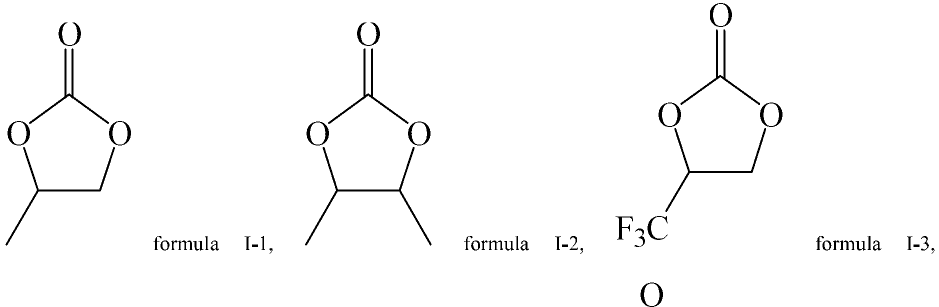

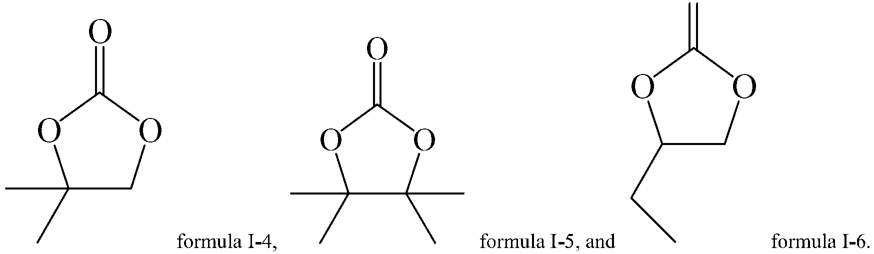

13. The sodium secondary battery according to any one of claims 1 to 4, wherein the negative electrode plate comprises a negative electrode current collector and a negative electrode film layer disposed on at least one surface of the negative electrode current collector, and the negative electrode film layer comprises a Ca element.

14. The sodium secondary battery according to claim 13, wherein the sodium secondary battery satisfies the following relationship: $3 \times {10}^{- 6} \leq e / d \leq 6 \times {10}^{- 3} ,$ wherein e represents a mass content of the Ca element based on a mass of the negative electrode film layer; d represents a ratio of the actual discharge-specific capacity of the negative electrode active material measured by using the three-stage stepwise discharge method in which the material is first discharged at the rate of 0.05C and then discharged at the currents of 40 µA and 10 µA in a voltage range of 0.05 V to 0.005 V to the total discharge-specific capacity of the negative electrode active material.

15. The sodium secondary battery according to claim 13, wherein based on a mass of the negative electrode film layer, a mass content e of the Ca element is 1 ppm to 2000 ppm.

16. The sodium secondary battery according to claim 13, wherein based on a mass of the negative electrode film layer, a mass content e of the Ca element is 2 ppm to 1000 ppm.

17. The sodium secondary battery according to any one of claims 1 to 4, wherein the negative electrode active material comprises hard carbon.

18. The sodium secondary battery according to any one of claims 1 to 4, wherein the sodium secondary battery further comprises a positive electrode plate, the positive electrode plate comprises a positive electrode current collector and a positive electrode film layer disposed on at least one surface of the positive electrode current collector, and the positive electrode film layer comprises a positive electrode active material.

19. The sodium secondary battery according to claim 18, wherein the positive electrode active material comprises a Cu element.

20. The sodium secondary battery according to claim 19, wherein the sodium secondary battery satisfies the following relationship: b/f ≥ 0.5,
wherein f represents a mass content of the Cu element based on a mass of the positive electrode active material; b represents the mass content of the first component based on a mass of the electrolytic solution.

21. The sodium secondary battery according to claim 19 or 20, wherein based on the mass of the positive electrode active material, the mass content of the Cu element is less than or equal to 23%.

22. The sodium secondary battery according to claim 19 or 20, wherein based on the mass of the positive electrode active material, the mass content of the Cu element is 6.5% to 18%.

23. The sodium secondary battery according to claim 18, wherein
the positive electrode active material comprises a sodium transition metal oxide, and the sodium transition metal oxide comprises NaₘCuₙXₒFeₚMn_{q}O₂₋ₛ, wherein X comprises one or more of Li, Be, B, Mg, Al, K, Ca, Ti, Co, Ni, Zn, Ga, Sr, Y, Nb, Mo, In, Sn, Fe, and Ba, 0.2 ≤ m ≤ 1, 0 ≤ n ≤ 0.5, 0 ≤ o < 0.5, 0 ≤ p ≤ 0.5, 0 < q ≤ 0.68, n + o + p + q = 1, and 0 ≤ s < 0.2.

24. The sodium secondary battery according to claim 23, wherein the sodium transition metal oxide comprises at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

25. The sodium secondary battery according to any one of claims 1 to 4, wherein the electrolytic solution further comprises a second component, and the second component comprises at least one of vinylene carbonate, vinyl ethylene carbonate, 1,3-propanesultone, 1,3-propenesultone, ethylene sulfate, maleic anhydride, succinic anhydride, triallyl phosphate, sodium bis(oxalato)borate, sodium tetrafluoro(oxalato)phosphate, sodium difluorobis(oxalato)phosphate, sodium difluorophosphate, and sodium fluorosulfonate.

26. The sodium secondary battery according to claim 25, wherein based on a mass of the electrolytic solution, a mass content of the second component is 0.01% to 10%.

27. The sodium secondary battery according to claim 25, wherein based on a mass of the electrolytic solution, a mass content of the second component is 0.1% to 5%.

28. An electric device, comprising the sodium secondary battery according to any one of claims 1 to 27.
